# EUROPEAN PATENT SPECIFICATION

(11) **EP 3 111 881 B1**
(45) Date of publication and mention of the grant of the patent: **22.05.2019**
(21) Application number: 16176517.7
(22) Date of filing: 27.06.2016
(51) Int. Cl.: A61C 7/28, A61C 7/30

(54) **SELF-LIGATING ORTHODONTIC BRACKET WITH AN EXTERNAL ROTATABLE CLOSURE MEMBER**
SELBSTKLEMMENDE ORTHODONTISCHE KLAMMER MIT DREHBAREM EXTERNEM VERSCHLUSSELEMENT
SUPPORT ORTHODONTIQUE À LIGATURE AUTOMATIQUE AVEC ÉLÉMENT DE FERMETURE ROTATIF

(30) Priority: 01.07.2015 US 201562187398 P
(43) Date of publication of application: 04.01.2017
(73) Proprietor: Ormco Corporation, Orange, CA 92867 (US)
(72) Inventor: ALAUDDIN, Samuel Shahrier, Rancho Cucamonga, California 91730 (US); NAZECK, Benjamin Mark, San Dimas, California 91773 (US)
(74) Representative: Findlay, Alice Rosemary

(56) References cited:
- US-A- 4 171 568
- US-A1- 2014 370 454
- US-A1- 2015 173 858

## Description

The invention relates generally to orthodontic brackets and, more particularly, to self-ligating orthodontic brackets having rotatable closure members and methods of using those orthodontic brackets.

Orthodontic brackets represent a principal component of all corrective orthodontic treatments devoted to improving a patient's occlusion. In conventional orthodontic treatments, an orthodontist or an assistant affixes brackets to the patient's teeth and engages an archwire into a slot of each bracket. The archwire applies corrective forces that coerce the teeth to move into orthodontically correct positions.

The archwire applies forces to the teeth by contact with the bracket according to one of two methodologies. The archwire may be actively ligated. "Active ligation" refers to orthodontic treatment in which ligatures or O-rings are used to impose a force on the archwire to force the archwire into the archwire slot. In active ligation, the archwire is not generally free to move relative to the bracket but is secured in the archwire slot by the ligature. Unlike active ligation, "passive ligation" is a technique in which the archwire may be more free to slide relative to the bracket, that is, relative movement between the archwire and the bracket is not intentionally inhibited as it is in active ligation. Depending on the patient, passive ligation may be particularly desirable during the early stages of treatment as it allows for gross movement of the tooth relative to the archwire. Active ligation may be more beneficial during the later stages of treatment during which the clinician typically desires to have fine rotational control of the tooth.

Due to difficulties encountered in applying an individual ligature to each bracket, self-ligating orthodontic brackets have been developed that eliminate the need for ligatures by relying on a movable portion or member, such as a latch or slide, for retaining the archwire within the bracket slot. The movable portion or member essentially creates a lumen to contain the archwire. Depending on the orthodontic bracket design, the latch or slide may provide passive and/or active ligation.

While such self-ligating brackets are generally successful in achieving their intended purpose, there remain some drawbacks. By way of example, in some instances controlling the rotation of the teeth, such as near the finishing stages of orthodontic treatment, can be problematic, particularly where a passive ligating bracket design is utilized. While there may be several factors that cause a reduction in rotational control, it is believed that one of the major causes is the loose fit or "play" of the archwire within the archwire slot of the bracket when the movable member is closed. A close fit between the lumen formed by the latch or slide in the bracket body and the archwire is believed to be important for achieving excellent rotational control during orthodontic treatment.

The close fit between the archwire and the archwire slot when the movable member is closed may be affected by several factors including, for example, the tolerances of the manufacturing process used to form the bracket body and the movable member. When the orthodontic bracket is assembled, the various tolerances may "stack up" so as to provide a relatively loose fit between the archwire and the lumen provided by the bracket body and the movable member. As noted above, such a loose fit is believed to result in a diminished capacity to control the rotation of the teeth.

A common practice or solution to resolve this problem includes removing the archwire from the archwire slot and inserting a larger cross- sectioned archwire into the slot. The larger archwire fills more of the available space defined by the closed lumen and thus reduces the amount of play between the archwire and the bracket. However, because archwires are generally of a uniform cross-sectional dimension, changing the archwire affects each of the brackets in the patient's arch. Alternatively, in addition to this practice, ligatures may be secured to a self-ligating bracket to forcibly restrain the archwire relative to the archwire slot. However, these practices in which archwires are exchanged or ligatures are added each require an office visit and significant chair time, both of which increase overall treatment duration and treatment costs.

Self-ligating brackets exist that produce both active and passive ligation. One such closure member for retaining the archwire within the bracket slot is a rotatable clip. The rotatable clip is movably mounted to the bracket body so as to be rotatable about a central clip axis. Rotation of the clip about the central axis moves the closure member between an opened position and one or more closed positions. By way of example, the rotatable clip may have an opened position in which the clip does not block or otherwise impede the insertion of the archwire into the archwire slot of the bracket. From this position, the clip may be rotated about the central axis to a closed position in which a portion of the clip closes off the archwire slot, thereby retaining the archwire therein. Such an orthodontic bracket is disclosed in U.S. Patent No. 8,162,660.

One challenge with self-ligating orthodontic brackets, and certainly with rotating clip orthodontic brackets, is designing an effective retention mechanism for movably coupling the clip to the bracket body. For example, in one approach, the rotating clip has a radially-extending rib that is received within an annular groove in the bracket body. Once the rib is positioned in the annular groove, such as during the assembly process, the clip may not be separated from the bracket body (such as by pulling it away from the bracket body in, for example, a buccal or labial direction), but the clip is rotatable relative to the bracket body between an opened position and a closed position.

In addition, orthodontists may find it desirable to have a positive indication of when the rotating clip is in the opened position and/or a closed position. This not only notifies the orthodontist when the clip is in the opened or closed position, but also aids in preventing or reducing the possibility of accidental or unintentional movement. While the rib/groove arrangement of prior rotating clip orthodontic brackets allows the clip to rotate among its various positions, there is nothing inherent in that arrangement that provides a positive indication of clip position. If such a feature is desired, it is typically incorporated separately. By way of example, in one approach, the rotating clip includes a bump or projection which is received in a dimple or recess of the bracket body when the rotating clip is in a closed position.

Thus, while self-ligating brackets have been generally successful, manufacturers of such brackets continually strive to improve their use and functionality. In this regard, there exists a need for a self-ligating orthodontic bracket having a rotating clip type of closure member that has an improved retention mechanism that not only retains the clip to the bracket body, but also provides a positive indication of clip position.

US 2014/370454 discloses an orthodontic bracket for coupling an archwire with a tooth which includes a bracket body and a rotatable member that is coupled to the bracket body. The rotatable member is rotatable relative to the bracket body from an opened position to at least one closed position. The rotatable member includes a body portion and a ligating portion that extends from the body portion and has at least one retention arm that together with the archwire slot forms a lumen for retaining the archwire when the rotatable member is in the at least one closed position.

The invention is as defined in claim 1.

In accordance with the invention, an orthodontic bracket is characterised by a body that defines an opening for receiving the bracket body.

According to one embodiment, the rotatable member forms a majority of the external surfaces of the orthodontic bracket. In that regard and in one embodiment, the bracket body has a cylindrical configuration in the opening defined by the rotatable member is circular. The rotatable member receives the cylindrical bracket body in the opening. In that regard, the rotatable member encircles at least a portion of the bracket body.

In one embodiment, the rotatable member is rotatable about a central axis that intersects the archwire slot.

In one embodiment, the orthodontic bracket further comprises a locking mechanism that couples the rotatable member to the bracket body and that provides at least one positive stop in the rotation of the rotatable member. The locking mechanism may include a spring pin.

In one embodiment, the locking mechanism includes a retention aperture having at least one nonplanar surface and the spring pin slidably cooperates with at least a portion of the nonplanar surface during rotation of the rotatable member. The nonplanar surface may include at least one enlarged portion and at least one narrow region. The spring pin may rest in the at least one enlarged portion at the at least one positive stop. In one embodiment, the locking mechanism produces an audible click when the rotatable member is at the at least one closed position. In one embodiment, the positive stop is associated with the closed position.

In one embodiment, the bracket body further includes a passageway that receives the spring pin and, when the bracket body is secured to a tooth, the passageway is between the archwire slot and the tooth.

In one embodiment, the ligating portion defines two opposing surfaces to at least partially define a labial side and a lingual side of the lumen.

In one embodiment, the ligating portion has a pair of retention arms and is positionable at a first closed position in which the retention arms and archwire slot define a first pair of lumens. The rotatable member is positionable at a second closed position that is different from the first closed position and in which the retention arms and archwire slot define a pair of second lumens. At least one of the first lumens has a labial-lingual dimension that is less than a labial-lingual dimension of at least one of the second pair of lumens.

In one embodiment, the archwire slot includes a base surface and opposing slot surfaces that extend outwardly from the base surface. When the rotatable member is in the closed position, the rotatable member defines a pair of lumens, each lumen being defined by the rotatable member and only one of the opposing slot surfaces of the archwire slot. In one embodiment, the ligating portion at least partially defines opposing cutouts, each cutout and one of the opposing slot surfaces defining a lumen. In one embodiment, the rotatable member includes a sidewall that defines one surface of the lumen. The surface is offset in a labial-lingual direction relative to the base surface.

In one embodiment, the rotatable member includes a first pair of retention arms that together with the sidewall at least partially define a first lumen and a second pair of retention arms that together with the sidewall at least partially define a second lumen. The first lumen has a different labial-lingual dimension than the second lumen. The retention arm may have a lower surface that defines a portion of the lumen and may form a nonorthogonal angle relative to at least one opposing slot surface of the archwire slot.

In one embodiment, the rotatable member includes a sidewall having an upper surface oriented at a nonorthogonal angle relative to at least one opposing slot surface. The upper surface forms a portion of the lumen.

In one embodiment the rotatable member is rotatable relative to the bracket body about a central axis that intersects an archwire slot from an opened position to each of (i) a first closed position in which the rotatable member and the archwire slot define a first lumen having a first dimension, (ii) a second closed position in which the rotatable member and the archwire slot define a second lumen having a second dimension, and (iii) a third closed position in which the rotatable member and the archwire slot define a third lumen having a third dimension. Each of the first dimension, the second dimension, and the third dimension of the lumens may be different.

The rotatable member may encircle a portion of the bracket body.

In one embodiment, at least one of the first, second, and third closed positions is configured to actively ligate the archwire and at least one other of the first, second, and third closed positions is configured to passively ligate the archwire. Each of the first dimension, the second dimension, and the third dimension may be labial-lingual dimensions. In one embodiment, the rotatable member further includes a fourth closed position in which the rotatable member and the archwire slot define a fourth lumen having a fourth dimension different from each of the first dimension, the second dimension, and the third dimension.

In one embodiment, the orthodontic bracket further includes a locking mechanism that slidably engages the rotatable member in one or more of the closed positions and that provides at least one positive stop in the rotation of the rotatable member relative to the bracket body. The locking mechanism may couple the rotatable member to the bracket body. The one positive stop may coincide with at least one of the first, second, and third closed positions.

In one embodiment, the locking mechanism includes a retention aperture having at least one nonplanar surface and a spring pin that slidably cooperates with at least a portion of the nonplanar surface during rotation of the rotatable member. The nonplanar surface may include at least one enlarged portion and at least one narrow region. The spring pin may rest in the enlarged portion at the positive stop.

In one embodiment, the bracket body and the rotatable member form lumens of different sizes at one or more of the closed positions. When a first archwire is inserted into the archwire slot and the rotatable member is rotated to a first closed position, the rotatable member actively ligates the first archwire. In that regard, the rotatable member and the bracket body form a first lumen that is about the same size as the corresponding dimension of the first archwire.

When the rotatable member is rotated to a second closed position and to a third closed position, the rotatable member passively ligates the first archwire. In this regard, the rotatable member and the bracket body form a second lumen at the second closed position and a third lumen at the third closed position. Each of the second lumen and the third lumen is larger than the corresponding dimension of the first archwire.

When a second archwire having at least one cross-sectional dimension larger than a corresponding cross-sectional dimension of the first archwire is inserted into the archwire slot and the rotatable member is rotated to the second closed position or to the third closed position, the rotatable member actively ligates the second archwire. The second archwire is larger in at least one dimension so as to fill the second lumen or the third lumen. The rotatable member may not be
rotatable to the first closed position when the second archwire is in the archwire slot. When the rotatable member is rotated to the third closed position, the rotatable member passively ligates the second archwire. In that regard, the third lumen may be larger in corresponding dimension than either of the second lumen or the first lumen.

In one embodiment, the rotatable member and the archwire slot form lumens corresponding to each closed position. At least two of the lumens have different dimensions to produce active ligation of the first archwire at the first closed position and passive ligation of the first archwire at the second closed position.

In one embodiment, the rotatable member is rotatable to a fourth closed position.

In one embodiment, the rotatable member is rotatable relative to the bracket body about a central axis that intersects the archwire slot.

In one embodiment, the rotatable member includes a body portion that defines an opening and the bracket body is received in the opening. In one embodiment, the rotatable member encircles at least a portion of the bracket body.

In one embodiment, the orthodontic bracket further includes a locking mechanism that slidably engages the rotatable member in one or more of the closed positions and that provides at least one positive stop in the rotation of the rotatable member relative to the bracket body. The positive stop may coincide with at least one of the first, second, and third closed positions.

In one embodiment, the locking mechanism couples the rotatable member to the bracket body. The locking mechanism may include a retention aperture having at least one nonplanar surface and a spring pin that slidably cooperates with at least a portion of the nonplanar surface during rotation of the rotatable member. The nonplanar surface includes at least one enlarged portion and at least one narrow region. The spring pin rests in the enlarged portion at the positive stop.

A method of moving a tooth to effect orthodontic treatment using an orthodontic bracket is disclosed which comprises inserting an archwire into an archwire slot in the orthodontic bracket. The method further includes rotating a rotatable member of the orthodontic bracket to a first closed position to passively ligate the archwire within the archwire slot. The method further includes rotating the rotatable member to a second closed position to passively ligate the archwire within the archwire slot. The method further includes rotating the rotatable member to a third closed position to actively ligate the archwire within the archwire slot.

The invention will now be further described by way of example with reference to the accompanying drawings, in which:
Fig. 1 is a perspective view of an orthodontic bracket according to one embodiment of the invention with a rotatable member shown in an opened position;
Fig. 2 is an exploded view of the orthodontic bracket of Fig. 1;
Fig. 3 is a side elevation view of the orthodontic bracket of Fig. 1;
Fig. 4 is a plan view of the orthodontic bracket of Fig. 1;
Fig. 5 is a perspective view of the orthodontic bracket of Fig. 1 with the rotatable member shown in a closed position;
Fig. 6A is a side elevation view of the orthodontic bracket shown in Fig. 5;
Fig. 6B is a cross sectional view of the orthodontic bracket taken along section line 6B-6B in Fig. 5;
Fig. 7 is a plan view of the orthodontic bracket shown in Fig. 5;
Fig. 8 is a perspective view of the orthodontic bracket shown in Fig. 1 with the rotatable member shown in a closed position different from the closed position shown in Fig. 5;
Fig. 9 is an elevation view of the orthodontic bracket shown in Fig. 8;
Fig. 10 is a plan view of the orthodontic bracket shown in Fig. 8;
Fig. 11 is a perspective view of an orthodontic bracket according to one embodiment of the invention with a rotatable member shown in an opened position;
Fig. 12 is an exploded view of the orthodontic bracket of Fig. 11;
Fig. 13 is a side elevation view of the orthodontic bracket of Fig. 11;
Fig. 14 is a plan view of the orthodontic bracket of Fig. 11;
Fig. 15 is a perspective view of the orthodontic bracket shown in Fig. 11 with the rotatable member shown in a closed position;
Fig. 16 is an elevation view of the orthodontic bracket shown in Fig. 15;
Fig. 17 is a plan view of the orthodontic bracket shown in Fig. 15;
Fig. 18 is a perspective view of the orthodontic bracket shown in Fig. 11 with the rotatable member shown in a closed position different from the closed position shown in Fig. 15;
Fig. 19 is an elevation view of the orthodontic bracket shown in Fig. 18;
Fig. 20 is a perspective view of an orthodontic bracket according to one embodiment of the invention with a rotatable member shown in an opened position;
Fig. 21 is an exploded view of the orthodontic bracket of Fig. 20;
Fig. 22A is an elevation view of the orthodontic bracket shown in Fig. 20;
Fig. 22B is a cross sectional view of the orthodontic bracket shown in Fig. 20 taken along section line 22B-22B;
Fig. 23 is a plan view of the orthodontic bracket shown in Fig. 20;
Fig. 24 is a perspective view of the orthodontic bracket shown in Fig. 20 with the rotatable member shown in a closed position;
Fig. 25 is an elevation view of the orthodontic bracket shown in Fig. 24;
Fig. 26 is a plan view of the orthodontic bracket shown in Fig. 24;
Fig. 27 is a perspective view of the orthodontic bracket shown in Fig. 20 with the rotatable member shown in a closed position different from the closed position shown in Fig. 24;
Fig. 28 is an elevation view of the orthodontic bracket shown in Fig. 27;
Fig. 29 is a plan view of the orthodontic bracket shown in Fig. 27;
Fig. 30 is a perspective view of the orthodontic bracket shown in Fig. 20 with the rotatable member shown in a closed position different from the closed position shown in Fig. 24;
Fig. 31 is an elevation view of the orthodontic bracket shown in Fig. 30;
Fig. 32 is a perspective view of the orthodontic bracket shown in Fig. 20 with the rotatable member shown in a closed position different from the closed position shown in Fig. 24;
Fig. 33 is an elevation view of the orthodontic bracket shown in Fig. 32; and
Fig. 34 is a plan view of the orthodontic bracket shown in Fig. 32.

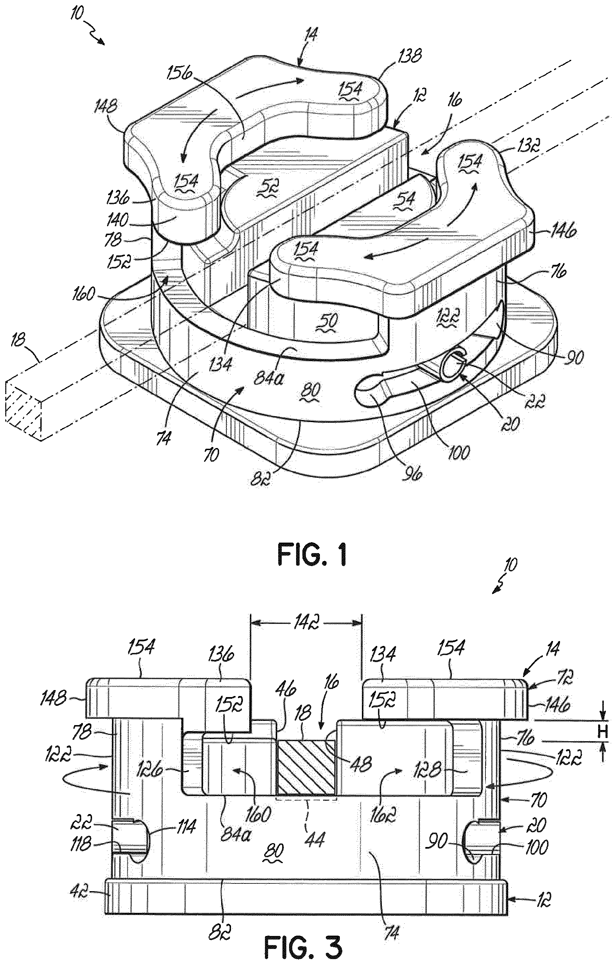

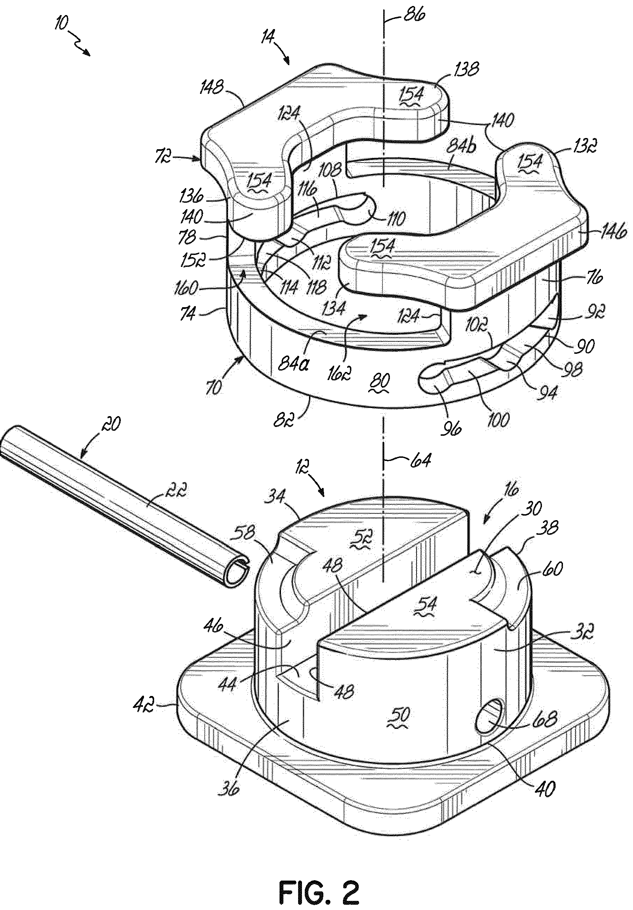

Referring now to the drawings, and to Figs. 1 and 2 in particular, an orthodontic bracket 10 includes a bracket body 12 and a movable closure member coupled to the bracket body 12. In one embodiment, the movable closure member includes a rotatable member 14 that is rotatably coupled with the bracket body 12. The rotatable member 14 may be external to the bracket body 12 rather than being an internal component that is rotatably captured in a cavity formed in the bracket body. The rotatable member 14 thus surrounds the bracket body 12 and may form the exposed external surfaces of the orthodontic bracket 10. The bracket body 12 includes an archwire slot 16 formed therein that is configured to receive an archwire 18 (shown in phantom in Fig. 1) for applying corrective forces to the teeth.

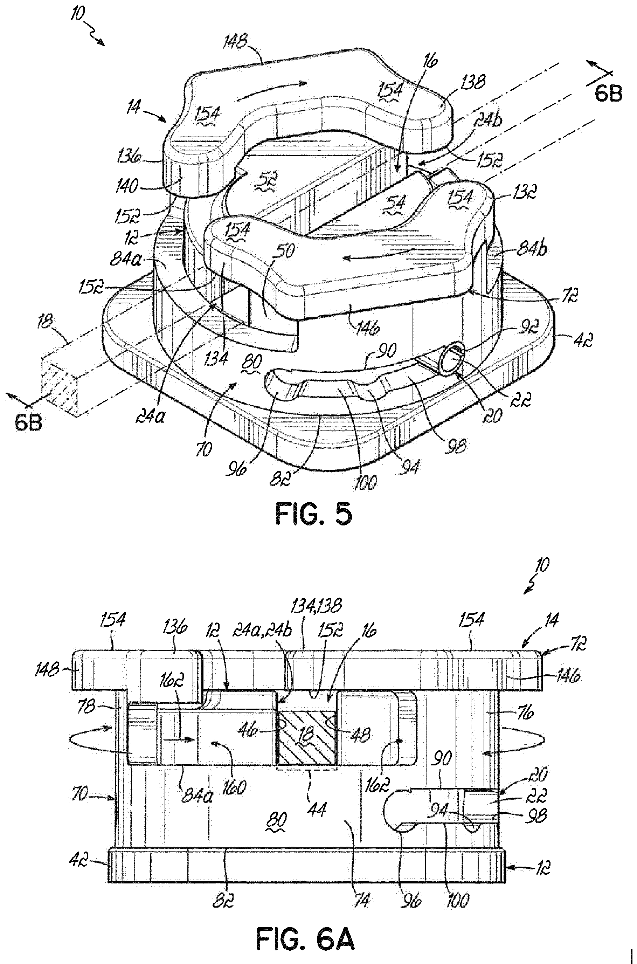

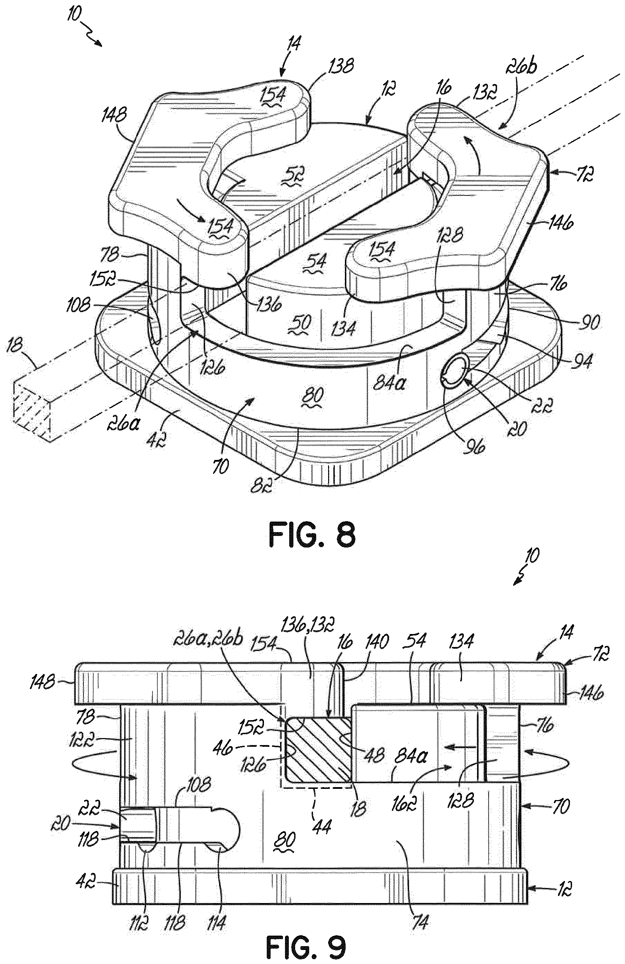

The rotatable member 14 is rotatable relative to the bracket body 12 from an opened position (Figs. 1, 3, and 4) in which the archwire 18 is insertable into the archwire slot 16, to a first closed position (Figs. 5, 6A, and 7) in which the archwire 18 is retained within one or more lumens 24a, 24b defined by the archwire slot 16 and the rotatable member 14, and to a second closed position (Figs. 8, 9, and 10) in which the archwire 18 is retained within one or more different lumens 26a, 26b defined by the archwire slot 16 and a different portion of the rotatable member 14. As shown, the lumens 24a, 24b or 26a, 26b may be spaced apart from one another, though aligned with one another, proximate each side of the bracket body 12. While lumens may be referred to herein singly, it will be appreciated that unless otherwise stated, reference is made to a pair of lumens that may be substantially identical in dimension. The spaced apart pair of lumens may be in contrast with a lumen that extends nearly the full mesial-distal length of the archwire slot 16. Such a full-length lumen may be formed by a ligating slide or clip, which are unlike the rotatable member according to embodiments of the invention.

As is described below, the rotatable member 14 may define different dimensions (e.g., labial-lingual dimension) for each of the lumens 24a, 24b or 26a, 26b. For example, in one closed position, the rotatable member 14 forms a pair of large lumens 24a, 24b relative to the archwire 18 in which there is clearance between each lumen 24a or 24b of the pair and the archwire 18 in one or more dimensions. In this position, the orthodontic bracket 10 passively ligates the archwire 18. And, in the other closed position, the rotatable member 14 forms a pair of smaller lumens 26a, 26b relative to the archwire 18. Each of the smaller lumens 26a, 26b more closely approximates the dimensions of the archwire 18 than the large lumens 24a, 24b such that there may be little or no clearance between the smaller lumens 26a, 26b and the archwire 18 in one or more directions. In this position, the orthodontic bracket 10 may actively ligate the archwire 18.

Advantageously, by virtue of the at least two closed positions, the orthodontic bracket 10 may provide both passive and active ligation on a given archwire. In other words, active and passive ligation may be achieved on a predetermined archwire by rotating the rotatable member 14 from one closed position to the other closed position. The rotatable member 14 may be rotated between the two closed positions numerous times during treatment. Thus, this configuration may reduce or entirely eliminate any necessity of utilizing consecutively larger archwires, which must be inserted and removed to effectuate complete orthodontic treatment, for improving rotational control.

By way of example only, orthodontic treatment may begin by passive ligation of an archwire (in one closed position) and then treatment may progress to active ligation (in another closed position) when improved rotational control is desired. In view of the embodiments in the invention, a clinician may select a single archwire for both passive and active ligation. Such an archwire may be used during the entire orthodontic treatment. Accordingly, embodiments of the present invention may bring about completion of orthodontic treatment more quickly by eliminating a need for any archwire changes during treatment.

Unlike a self-ligating orthodontic bracket having a U-shaped clip or other flexible retaining member, the rotatable member according to embodiments of the invention does not flex appreciably at loads observed during normal orthodontic treatment.

In addition, and with reference now to Figs. 1, 2, and 3, the orthodontic bracket 10 includes a locking mechanism 20. During orthodontic treatment, in accordance with an aspect of the invention, the locking mechanism 20 has multi-functional capabilities in regard to the rotatable member 14. More particularly, the multi-functional locking mechanism 20 is configured to not only rotationally secure the rotatable member 14 relative to the bracket body 12 such that the rotatable member 14 may not be inadvertently rotated, but also provides a discernible indication of the rotational position of the rotatable member 14 relative to the bracket body 12. The clinician may then associate the discernible indication with one of the closed positions and optionally the opened position of the rotatable member 14. As described below, the locking mechanism 20 may also secure the rotatable member 14 to the bracket body 12 and thereby prevent the rotatable member 14 from being inadvertently separated from the bracket body 12 during treatment.

In regard to the first multi-functional capability, the locking mechanism 20 provides one or more positive stops in the rotation of the rotatable member 14 relative to the bracket body 12. As used herein, a positive stop is where there is an interaction between the rotatable member 14 and the locking mechanism 20 such that a threshold level of force or a threshold level of torque must be applied to the rotatable member 14 for the rotatable member 14 to begin to rotate relative to the bracket body 12 in at least one direction (e.g., clockwise or counterclockwise). Of course, when the rotatable member 14 is coupled to the bracket body 12, there may a certain amount of friction between the two such that rotating the rotatable member 14 will require a certain amount of force or torque even in the absence of a positive stop feature. The threshold level of force or torque for defining a positive stop is intended to be greater than that required to overcome this type of friction between the rotatable member 14 and the bracket body 12.

In the exemplary embodiment shown, the locking mechanism 20 may include a spring pin 22 that slidably engages the rotatable member 14 in one or more of the opened and closed positions. In one exemplary embodiment, the spring pin 22 may be a slotted tubular pin of titanium, stainless steel, or NiTi that is coupled to the bracket body 12 and that may slidably engage the rotatable member 14 during rotation thereof. The spring pin 22 includes a cutout or slit formed in the sidewall thereof that extends along at least a portion of the length of the spring pin 22. For example, the slit may extend for the full length of the spring pin 22. The spring pin 22 may be formed, for example, through a rolling process so as to define the slit, or alternatively, may be formed by cutting a tubular member to form the slit. Additionally, the spring pin 22 may be formed from materials including, titanium alloys, NiTi-type superelastic materials, or other suitable materials. Other configurations may also be possible. For example, the spring pin 22 may be unslotted or have a continuous, uninterrupted sidewall.

In addition to maintaining the rotatable member 14 in one position, and according to another multi-functional capability, the locking mechanism 20 may couple the rotatable member 14 to the bracket body 12 and restrain the rotatable member 14 when the archwire 18 pulls on the rotatable member 14. The pin 22 transfers loads from the rotatable member 14 to the bracket body 12 and consequently to the tooth. As shown, the pin 22 may be oriented perpendicular to a force transferred from the archwire 18 to the rotatable member 14. For labial applications of the orthodontic bracket 10, the pin 22 may be oriented to counteract forces acting on the rotatable member 14 in the labial direction that tend to pull the archwire 18 labially out of the archwire slot 16. For example, where the archwire 18 pulls labially on the rotatable member 14 during orthodontic treatment, the pin 22 may be oriented in a mesial-distal direction, as shown, or in an occlusal-gingival direction. More specifically, the pin 22 may be in a plane generally parallel to a plane of a base surface of the archwire slot 16 and/or in a plane generally parallel with a tangent of the adjacent tooth surface.

To these and other ends, with reference to Figs. 1 and 2, the orthodontic bracket 10, unless otherwise indicated, is described herein using a reference frame attached to a labial surface of an anterior tooth on the lower jaw. Consequently, as used herein, terms such as labial, lingual, mesial, distal, occlusal, and gingival used to describe the orthodontic bracket 10 are relative to the chosen reference frame. The embodiments of the invention, however, are not limited to the chosen reference frame and descriptive terms, as the orthodontic bracket 10 may be used on other teeth and in other orientations within the oral cavity. For example, the orthodontic bracket 10 may also be coupled to the lingual surface of the tooth. For these applications, the lumens described herein may differ in labial-lingual dimension according to the position of the rotatable member. Those of ordinary skill in the art will recognize that the descriptive terms used herein may not directly apply when there is a change in reference frame. Nevertheless, embodiments of the invention are intended to be independent of location and orientation within the oral cavity and the relative terms used to describe embodiments of the orthodontic bracket 10 are to merely provide a clear description of the embodiments in the drawings. As such, the relative terms labial, lingual, mesial, distal, occlusal, and gingival are in no way limiting the invention to a particular location or orientation.

When mounted to the labial surface of a tooth carried on the patient's lower jaw and with reference specifically to Fig. 2, the bracket body 12 has a labial side 30, an occlusal side 32, a gingival side 34, a mesial side 36, a distal side 38, and a lingual side 40. The lingual side 40 of the bracket body 12 is configured to be secured to the tooth in any conventional manner, such as, by an appropriate orthodontic cement or adhesive or by a band around an adjacent tooth.

In one embodiment shown in Figs. 1 and 2, the lingual side 40 may be further provided with a pad 42 defining a bonding base that is secured to the surface of the tooth. The pad 42 may be coupled to the bracket body 12 as a separate piece or element, or alternatively, the pad 42 may be integrally formed with the bracket body 12. Further, the pad 42 may be specifically shaped to fit on the surface of a particular tooth and may therefore have a multitude of configurations different from that shown in Figs. 1 and 2. It will be appreciated that embodiments of the present invention are not limited to any particular configuration of the pad 42.

With reference to Figs. 1 and 2, the bracket body 12 includes a base surface 44 and a pair of opposed slot surfaces 46, 48 projecting labially from the base surface 44 that collectively define at least a portion of the archwire slot 16, which may extend in a mesial-distal direction from mesial side 36 to distal side 38. The base surface 44 and slot surfaces 46, 48 are substantially encapsulated or embedded within the material of the bracket body 12.

As shown in Fig. 2, the bracket body 12 may have a cylindrical configuration (e.g., a right circular cylinder) defined by outer surface 50. A generally planar support surface 52 extends in a generally gingival-occlusal direction from slot surface 46, and a generally planar support surface 54 extends in a generally gingival-occlusal direction from slot surface 48. The outer surface 50 and the planar support surfaces 52, 54 are configured to slidably support the rotatable member 14 on the bracket body 12 and are sized to fit within and be generally internally located within the rotatable member 14.

The bracket body 12 may define a central axis 64 extending in the labial-lingual direction, as shown in Fig. 2. The central axis 64 may intersect the archwire slot 16 approximately at its geometric center in a substantially perpendicular manner and may define an axis of rotation about which the rotatable member 14 rotates in counter clockwise and/or clockwise directions relative to the bracket body 12 as indicated by the arrows in Fig. 1.

As shown in Fig. 2, the bracket body 12 includes a passageway 68 that receives a portion of the spring pin 22 for securing the rotatable member 14 to the bracket body 12. The passageway 68 is open to at least one of the occlusal, gingival, mesial, and distal sides 32, 34, 36, 38, respectively. In the exemplary embodiment shown, the passageway 68 extends from the occlusal side 32 to the gingival side 34 of the bracket body 12 so as to present a through-bore positioned lingually of the archwire slot 16. The passageway 68 may not intersect the archwire slot 16. The passageway 68 may be oriented in a plane that is substantially parallel to the archwire slot 16. In the particular embodiment shown, the passageway 68 is oriented perpendicular to the archwire slot 16. Embodiments of the invention are not limited to the orientation shown. For example, the passageway 68 may be open to only one of the occlusal side 32 or the gingival side 34 of the bracket body 12 and be closed off opposite the open side. Although not shown, the passageway 68 may extend in a mesial-distal direction and be open to at least one of the mesial and distal sides 36, 38.

In one embodiment, the bracket body 12 does not form any portion of the external surfaces of the orthodontic bracket 10. Specifically, the outer surface 50 on each of the occlusal side 32, the gingival side 34, the mesial side 36, and the distal side 38 of the bracket body 12 are separated from the oral environment by the rotatable member 14 with portions of the sides 32, 34, 36, and 38 being shielded from the oral environment by the rotatable member 14. The planar support surfaces 52, 54 defining the labial side 30 of the bracket body 12 may also be separated from the oral environment by the rotatable member 14 with portions of each surface 52, 54 being shielded from the oral environment by the rotatable member 14.

A gingival guide channel 58 may be recessed into the planar support surface 52. The guide channel 58 may be in the form of a generally arcuate recess along a portion of the bracket body 12. In the exemplary embodiment shown, the guide channel 58 opens to the slot surface 46 on the mesial side 36 and separates the outer surface 50 from the planar support surface 52 along at least a circumferential portion of the bracket body 12. Any remainder of a circumferential edge along the gingival side 34 of the bracket body 12 may be defined by the intersection of the outer surface 50 and the planar support surface 52. The gingival guide channel 58 slidably receives a portion of the rotatable member 14 described below.

Similarly, in Fig. 2, an occlusal guide channel 60 may be recessed into the planar support surface 54. The guide channel 60 may be in the form of a generally arcuate recess along a portion of the bracket body 12. In the exemplary embodiment shown, the guide channel 60 opens to the slot surface 48 on the distal side 38 and separates the outer surface 50 from the planar support surface 54 along at least a circumferential portion of the bracket body 12. Any remainder of a circumferential edge along the occlusal side 32 of the bracket body 12 may be defined by the intersection of the outer surface 50 and the planar support surface 54. The occlusal guide channel 60 slidably receives a portion of the rotatable member 14 described below. Although not shown, the gingival guide channel 58 and the occlusal guide channel 60 may extend the full circumferential portion of the respective support surface 52, 54 or be reversed in orientation. For example, the gingival guide channel 58 may extend from the distal side 38 and the occlusal guide channel 60 may extend from the mesial side 36.

With reference to Figs. 1 and 2, the rotatable member 14 is generally a ring-shaped structure configured to form many of the exterior-most surfaces of the orthodontic bracket 10. The rotatable member 14 includes a body portion 70 that defines an opening for receiving the bracket body 12. As shown in Fig. 2, the rotatable member 14 fits over so as to surround at least a portion of the bracket body 12. The rotatable member 14 includes a ligating portion 72 that extends from the body portion 70 and ligates the archwire 18 (e.g., actively and/or passively, described below) when the rotatable member 14 is in one of the closed position(s) (e.g., shown in Figs. 5 and 8).

In one embodiment, the body portion 70 includes a base 74 and a pair of spaced-apart columns or studs 76, 78. The base 74 may be ring-shaped defining an opening and an axis 86 and includes a sidewall 80 having a lower surface 82 (i.e., lingually positioned) and upper surfaces 84a, 84b (i.e., labially positioned) extending circumferentially between studs 76, 78 on opposing sides of the rotatable member 14. The sidewall 80 may encircle the bracket body 12 when the bracket body 12 is inserted within the opening. The upper surfaces 84a, 84b of the sidewall 80 on each side of the rotatable member 14, instead of the base surface 44, form the lingual wall of the lumen 24a, 24b at each side 36, 38 of the bracket body 12. Thus, while the majority of the sidewall 80 is positioned lingually of the base surface 44, the upper surfaces 84a, 84b are offset in the labial direction relative to the base surface 44. The sidewall 80 is dimensioned to receive and surround a portion of the outer surface 50 of the bracket body 12 with the lower surface 82 confronting the pad 42.

In one embodiment, the locking mechanism 20 includes at least one retention aperture 90 formed in the rotatable member 14 that receives a portion of the spring pin 22 (shown in Fig. 1). In the exemplary embodiment shown, the retention aperture 90 may be an elongated through-bore and may extend circumferentially around a portion of the sidewall 80.

The orthodontic bracket 10 may be assembled by placing the rotatable member 14 on the bracket body 12 according to the arrow in Fig. 2 with the retention aperture 90 aligned with the passageway 68. The pin 22 may be inserted through the retention aperture 90 into the passageway 68. The spring pin 22 may be press fit or slip fit into passageway 68, and/or may be secured thereto to prevent relative movement therebetween using various processes including staking, tack welding, laser welding, adhesives, or other suitable methods.

The spring pin 22 may project from the passageway 68 beyond one or both of the occlusal side 32 and the gingival side 34 of the bracket body 12 to cooperate with the rotatable member 14, as is described below. Cooperation between a portion of the pin 22 that extends from the passageway 68 and the retention aperture 90 couples the rotatable member 14 to the bracket body 12 according to one of the multi-functional aspects of the locking mechanism 20 and retains the rotatable member 14 in at least one of the opened position and the closed positions according to another of the multi-functional aspects of the locking mechanism 20. While the retention aperture 90 is shown symmetrically positioned relative to the stud 76, embodiments of the invention are not limited to any particular relative position of the studs 76, 78 and the retention aperture 90. For example, the retention aperture 90 may be positioned in the sidewall 80 between the studs 76 and 78.

By way of example and with reference to Fig. 2, the locking mechanism 20 may retain the rotatable member 14 in each of the opened and closed positions. In that regard, the retention aperture 90 may include a nonplanar surface with which the spring pin 20 interacts. The nonplanar surface may include a combination of recesses and/or projections positioned in the sliding path of the spring pin 20 and arranged to interfere with movement of the nonplanar surface relative to the spring pin 20. The nonplanar surface may forcibly deform the spring pin 20 at predetermined locations and so provide resistance to relative movement between the spring pin 20 and the rotatable member 14. In the exemplary embodiment shown, the retention aperture 90 includes three spaced apart enlarged portions 92, 94, and 96 separated by narrow regions 98 and 100. As is described below, there may be one-to-one correspondence between the enlarged portions 92, 94, and 96 and the opened and closed positions. That is, each of the positions of the rotatable member 14 may correspond to the spring pin 22 being located in one of the enlarged portions 92, 94, and 96.

The enlarged portions 92, 94, 96 of the retaining aperture 90 may be enlarged in one or more dimensions relative to the narrow regions 98 and 100. Each enlarged portion 92, 94, 96 may appear as an intersection of a circular bore with a rectangular slot with arcuate regions of the bores recessed into one or both opposing surfaces of the otherwise rectangular slot. The size of the enlarged portions 92, 94, 96 may approximate or be slightly larger than a cross-sectional dimension of the spring pin 22 when it is relaxed or in an unstressed condition. Thus, in the absence of an archwire in the archwire slot 16 and when the pin 22 is in one of the enlarged portions 92, 94, 96, the pin 22 may be unstressed in one or both of a radial direction and a longitudinal direction. In an alternative embodiment, the enlarged portions 92, 94, 96 may be sized to produce radial compression or other elastic deformation of the spring pin 22. In this regard, the spring pin 22 may be elastically deformed in one or more of the opened and closed positions. Elastic deformation is temporary deformation that is characterized by the initial linear region of a stress-strain curve for the material of the spring pin 22. The deformed spring pin 22 will therefore revert to its original configuration when the stress causing the deformation is removed. Further in this regard, elastic deformation may be limited to deformation of a cross-sectional dimension of the spring pin 22 (e.g., radial compression), though embodiments of the invention may include a combination of elastic deformation of the cross-sectional dimension of the spring pin 22 and bending of the spring pin 22 along a longitudinal axis.

Further, while the enlarged portions 92, 94, and 96 are shown to have approximately the same overall dimensions, embodiments of the invention are not restricted to each enlarged portion 92, 94, and 96 being the same dimension. For example, the enlarged portion 94 may have a reduced labial-lingual dimension relative to each of the enlarged portions 92, 96. As a result, the enlarged portion 94 may radially compress the pin 22 to a greater degree than either of the enlarged portions 92, 96. The reverse arrangement may also be utilized. That is, the enlarged portions 92, 96 may have a reduced labial-lingual dimension relative to the labial-lingual dimension of the enlarged portion 94. Or, each of the enlarged portions 92, 94, 96 may be differently dimensioned.

As shown best in Fig. 2, the narrow regions 98 and 100 separate the enlarged portions 92, 94, 96. Specifically, the narrow region 98 separates the enlarged portion 92 from the enlarged portion 94 and the narrow region 100 separates the enlarged portion 94 from the enlarged portion 96. The labial-lingual distance between the opposed surfaces defining the narrow regions 98 and 100 is less than the corresponding dimension of the adjacent enlarged portion. This arrangement produces an interference fit between the spring pin 22 and the narrow regions 98 and 100 when the spring pin 22 is in one of the enlarged portions 92, 94, 96. As with the relative dimensions of the enlarged portions 92, 94, 96, it will be appreciated that embodiments of the present invention are not limited to each of the narrow regions 98 and 100 having the same labial-lingual dimension.

The narrow regions 98 and 100 slidably receive the spring pin 22. However, to fit within either narrow region 98 or 100, the spring pin 22 may be radially compressed or otherwise elastically deformed to a greater degree than any elastic deformation of the spring pin 22 in the enlarged portions 92, 94, 96. The change in dimension of the spring pin 22 may be facilitated by a reduction in the dimension of the slit in the spring pin 22. Movement of the spring pin 22 from one enlarged portion 92, 94, 96 into the adjacent narrow region 98 or 100 squeezes the dimensions of the spring pin 22 to fit within the narrow region 98 or 100. The narrow regions 98 and 100 thus limit unintentional relative movement between the pin 22 and the rotatable member 14.

During treatment, the clinician may rotate the rotatable member 14 relative to the bracket body 12 by applying torque sufficient to compress the spring pin 22 to fit within the narrow region 98, 100. Once the pin 22 is radially compressed or otherwise reduced in dimension, the clinician may continue rotation of the rotatable member 14. The deformed spring pin 22 slides in contact with the surfaces defining one of the narrow regions 98, 100. The torque required to slide the spring pin 22 in either of the narrow regions 98, 100 is different (e.g., less) than the torque required to move the pin 22 from one of the enlarged portions 92, 94, 96 into one of the narrow regions 98, 100. The difference in the magnitude of the torque may be discernable to the clinician.

As the clinician rotates the rotatable member 14 with the spring pin 22 squeezed into one of the narrow regions 98, 100, the adjacent enlarged portion 92, 94, 96 may approach the elastically deformed spring pin 22. Once the spring pin 22 begins entry into the enlarged portion 92, 94, 96, there may be a position of the spring pin 22 relative to the enlarged portion 92, 94, 96 in which the rotatable member 14 may spontaneously move. This may be the result of the spring pin 22 releasing its elastic energy as it expands into the enlarged portion 92, 94, 96. The spring pin 22 may spontaneously elastically expand out of the narrow region 98 or 100 and into the enlarged portion 92, 94, or 96. This spontaneous movement may produce a tactile sensation and/or an audible response, such as, a click, and thereby assure the clinician that the rotatable member 14 is in the opened position or one of the closed positions, as is described in more detail below.

In the exemplary embodiment shown and with continued reference to Fig. 2, the locking mechanism 20 may include a second retention aperture 108 that cooperates with another portion of the pin 22 (not shown) that extends from the passageway 68 on the gingival side 34 of the bracket body 12. The second retention aperture 108 may be substantially similar to the retention aperture 90. In that regard, the second retention aperture 108 may include one or more enlarged portions 110, 112, 114 separated by a restriction, such as, narrow regions 116, 118. In the embodiment shown, the enlarged portions 110 and 112 are separated by narrow region 116 and the enlarged portions 112 and 114 are separated by narrow region 118.

The second retention aperture 108 may be redundant in function to the retention aperture 90 and may be symmetrical to the retention aperture 90 about the axis 86. The spring pin 22 may therefore reside in the enlarged portion 92 of the retention aperture 90 and in the enlarged portion 114 of the retention aperture 108 or in the enlarged portion 94 and in the enlarged portion 112 or in the enlarged portion 110 and in the enlarged portion 96 so that each end of the spring pin 22 is similarly engaged with the rotatable member 14 during rotation of the rotatable member 14. It will be appreciated that this redundancy or symmetry may enhance the tactile and/or audible response and ensure that the load on the rotatable member 14 from the archwire 18 is transferred approximately equally in the direction of the passageway 68 from the rotatable member 14 to the bracket body 12.

With reference to Figs. 1, 2, and 3, and with regard to the ligating portion 72, the studs 76, 78 generally extend upwardly (e.g., labially) from the upper surfaces 84a, 84b of the base 74 as an extension of the sidewall 80 and are generally symmetrically arranged. Each stud 76, 78 includes an outer surface 122 having a generally arcuate configuration such that the outer surface 122 is smooth and continuous with the sidewall 80 of the base 74 (e.g., it is an extension of the base 74). The arcuate outer surface 122 of the studs 76, 78 forms an exterior surface of the orthodontic bracket 10.

Each stud 76, 78 further includes an inner surface 124 which confronts the outer surface 50 of the bracket body 12 in the opened position and the closed positions. The inner surface 124 may have a generally arcuate configuration such that the inner surface 124 is smooth and continuous with the sidewall of the base 74. A side surface 126 and a side surface 128 extend between the outer surface 122 and the inner surface 124 of the studs 76, 78.

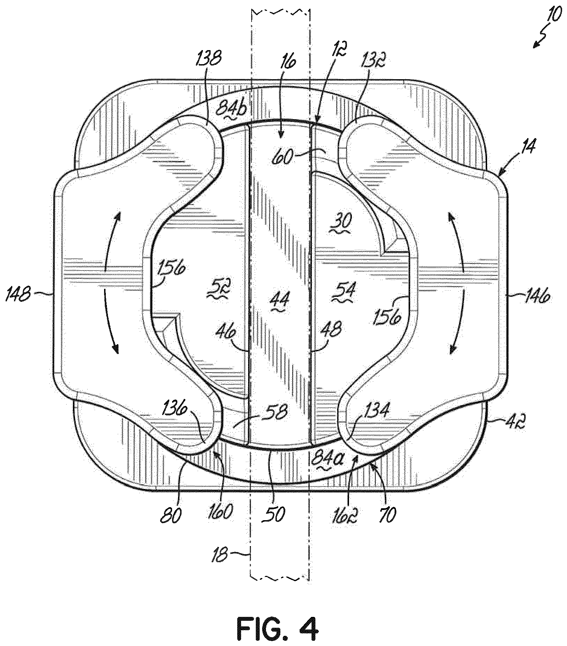

With reference to Figs. 1 and 2, the ligating portion 72 of the rotatable member 14 includes two pairs of retention arms 132, 134 and 136, 138 extending from the studs 76, 78, respectively, in a transverse manner such that the retention arms 132, 134, 136, 138 are generally parallel to the corresponding upper surfaces 84a, 84b of the base 74. The retention arms 132, 134, 136, 138 are arranged on their respective studs 76, 78 with each terminating in a free end 140. As shown, the retention arms 132 and 134 extend from the stud 76 so as to form a semi-circular shaped extension. Similarly, the retention arms 136 and 138 extend from the stud 78 so as to form a semi-circular shaped extension separated from the opposing semi-circular shaped extension by a gap 142 (labeled in Fig. 3). When the rotatable member 14 is in the opened position, as is shown in Figs. 3 and 4, the gap 142 allows access to the archwire slot 16 such that the clinician may insert the archwire 18 into the archwire slot 16.

In one embodiment, the ligating portion 72 includes a pair of tie wings 146, 148 extending from studs 76, 78, respectively, in a transverse manner. The tie wings 146, 148 may rotate relative to the archwire slot and may receive ligatures, power chains, or other connective devices as are known in the art and often used in orthodontic treatment when the clinician finds it necessary to ligate an archwire to the rotatable member 14. This may be the case where the archwire may not be forced into the archwire slot 16, for example, at the outset of treatment. As shown, tie wing 146 extends generally in an occlusal direction or generally away from the retention arms 132, 134. The tie wing 148 extends generally in a gingival direction or generally away from the retention arms 136, 138.

With reference to the rotatable member 14 in Fig. 4, in one embodiment, the tie wings 146, 148 may facilitate rotation of the rotatable member 14 in a relatively simplified manner. For example, a tool (e.g., a pair of pliers or wrench) may be used to grip the tie wings 146, 148 to forcibly rotate the rotatable member 14 in a clockwise direction and in a counterclockwise direction. Alternatively, the clinician may simply rotate the rotatable member 14 with their fingers by pinching the tie wings 146, 148.

With reference to Figs. 2 and 3, each of the retention arms 132, 134, 136, 138 includes a lower surface 152, an upper surface 154, and a sidewall 156 extending therebetween. In one embodiment, a portion of the sidewall 156 faces inwardly and forms an arcuate region on each of the pairs of retention arms 132 and 134 and 136 and 138. The support surfaces 52 and 54 may be at least partially exposed from the labial direction through the exposed region between opposing sidewalls 156. The corresponding upper surfaces 84a, 84b and the lower surfaces 152 of the retention arms 132 and 136 and the side surfaces 126 of the studs 76, 78 each form a cutout 160. And, the corresponding upper surfaces 84a, 84b and the lower surfaces 152 of the retention arms 134 and 138 and the side surfaces 128 of the studs 76, 78 form a cutout 162. As shown, the cutouts 160, 162 may have different labial-lingual dimensions.

In Fig. 3, in one embodiment, the lower surfaces 152 of retention arms 134 and 136, while being planar, do not all reside in the same plane. The lower surface 152 of retention arm 136 is closer to the upper surface 84a than the lower surface 152 of the retention arm 134. This difference in height between the two planes is labeled "H" in Fig. 3. It will be appreciated that while not shown in Fig. 3, the lower surface 152 of the retention arm 138 may reside in the same plane as the lower surface 152 of the retention arm 134, and the lower surface 152 of the retention arm 132 may reside in the same plane as the lower surface 152 of the retention arm 136. The difference in labial-lingual position of the lower surfaces 152 of the retention arms 132, 136 versus the labial-lingual position of the lower surfaces 152 of the retention arms 134, 138 may produce passive ligation and active ligation, respectively, of the same archwire in the archwire slot 16, as is described below.

As shown in Fig. 3, this configuration may result in the through-thickness of one pair of retention arms, as measured from the upper surface 154 to the lower surface 152, being thinner than the thickness of the other pair of retention arms. For example, the thickness of the pair of retention arms 132, 136 may be greater than the thickness of the pair of retention arms 134, 138 as measured from the lower surface 152 to the upper surface 154. By way of example, the difference in thickness between the retention arms 132, 136 and the retention arms 134, 138 may be from about 0.043 mm (0.0017 inch) to about 0.053 mm (0.0021 inch), though other thickness differences may be utilized depending on the dimensions of the archwire 18.

In view of the difference in thickness, the lower surfaces 152 of the retention arms 134, 138 may confront and slidably contact the corresponding planar support surfaces 52, 54 during relative movement. The lower surfaces 152 of the thicker retention arms 132, 136 confront and may slidably contact the corresponding guide channel 58, 60 during rotation of the rotatable member 14 between each of the closed positions and the opened position.

As is described below, the dimension of the lumens 26a, 26b formed by the retention arms 132, 136 and the upper surfaces 84a, 84b, as represented by cutout 160, and opposed slot surfaces 46, 48 is different from the dimension of the lumens 24a, 24b formed by the retention arms 134, 138 and the upper surfaces 84a 84b, represented by cutout 162, and opposed slot surfaces 46, 48 (Fig. 6A). For example, a labial-lingual dimension of the lumen 26a formed by the cutout 160 differs from the labial-lingual dimension of the lumen formed by the cutout 162. By adjusting the dimensions (e.g., the labial-lingual thickness) of each one of the pairs of retention arms 132, 136 and 134, 138 different height dimensions for the lumens 24a, 24b and 26a, 26b formed in each of the corresponding closed positions may be obtained. While reference may be made to a lumen formed by surfaces of the rotatable member 14 and the bracket body 12 at one side (e.g., the mesial side 36), an identical lumen may also be formed by the rotatable member 14 and the bracket body 12 at the opposing side (e.g., the distal side 38) of the bracket body 12. Embodiments of the invention are not, however, limited to each lumen in any particular pair of lumens being the same.

With regard to forming the lumens 24a, 24b and 26a, 26b, the rotatable member 14 may be machined following assembly, as described above. In one embodiment of the invention, the lower surfaces 152 of any single one of the retention arms 132, 134, 136, 138 may be machined after assembly of the orthodontic bracket 10. For example, the retention arms 134, 138 may be positioned over the archwire slot 16 (shown Fig. 6A). The rotatable member 14 may then be machined by passing a broach into or through the archwire slot 16 so as to remove material from the rotatable member 14, for example, particularly from the retention arms 134, 138 to form the lower surfaces 152 thereof.

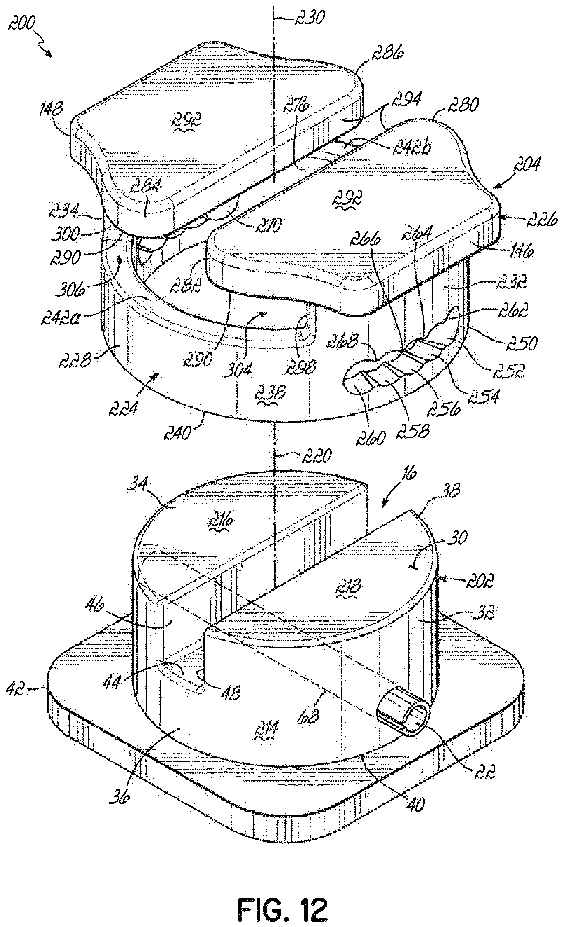

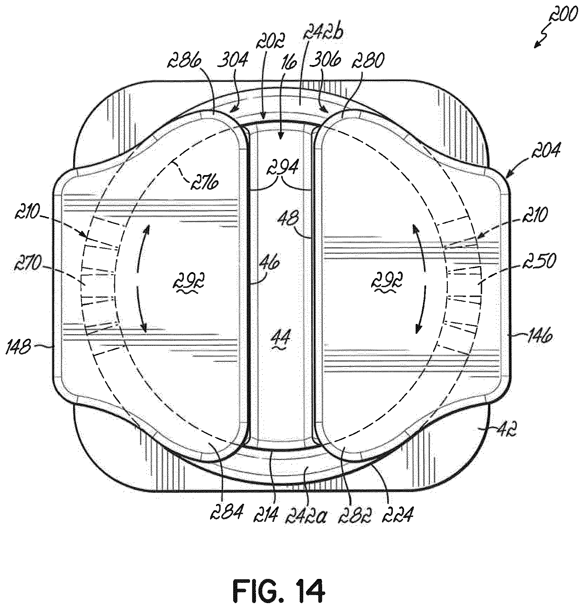

The retention arms 132, 136 may be machined in a similar manner by first orienting the rotatable member 14 in the other closed position in which the retention arms 132, 136 are positioned over the archwire slot 16 (Figs. 12, 13, and 14). A broach of a different dimension may be inserted into or through the archwire slot 16 to remove material from each of the retention arms 132, 136 thereby forming a different labial-lingual dimension than the retention arms 134, 138. It will be appreciated that this machining process may produce very tight tolerance dimensions of the lumens for each of the closed positions of the rotatable member 14. For example, variation in labial-lingual dimension may vary by plus or minus 0.0005 inch, at most.

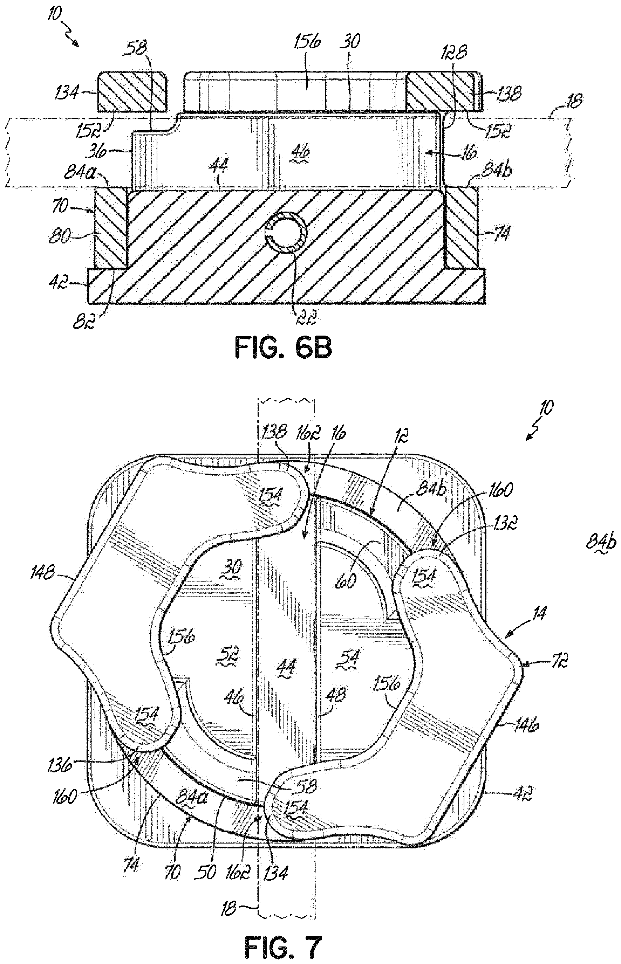

During treatment, and with reference to Figs. 1 and 5-7, the rotatable member 14 may be rotated (e.g., clockwise) from the opened position shown in Fig. 1 to a closed position shown in Figs. 5-7. In the closed position shown, the retention arms 134, 138 extend over the archwire slot 16 and may be positioned at least partially directly opposite to the base surface 44 (shown best in Fig. 7) to retain the archwire 18 therein. The retention arms 134, 138 may be positioned at least partially directly opposite the upper surface 84. With this configuration, the lumen 24a is formed by the cutouts 162 and the opposed slot surfaces 46, 48. Thus, a combination of the rotatable member 14 and the archwire slot 16 bound the archwire 18 to retain it within the bracket 10. It will be appreciated that while the lumen may be described as being "closed" (i.e., a "closed lumen") herein, the lumen formed by the rotatable member 14 and the bracket body 12 may not be a continuous boundary and so the term "closed" may refer to prohibiting the inadvertent escape of the archwire from the bracket body and when used, shall be understood as not limited to a continuous, uninterrupted boundary in the lumen. In that regard, it will be appreciated there may be clearance gaps between the rotatable member 14 and the bracket body 12 for example, from machining tolerances. By the presence of gaps, the rotatable member 14 may not directly abut the bracket body 12 at each closed position. Nevertheless, any gaps in the boundary that defines the lumen are sufficiently small so that the lumen formed effectively contains the archwire 18 within the bracket 10.

As is shown in Figs. 6A and 6B, the lingual side of the lumen 24a at the mesial side 36 is formed by the upper surface 84a. This provides at least two advantages. By forming the lingual and labial sides of the lumen 24a with the upper surface 84a of the sidewall 80 (instead of the base surface 44) and the surface 152 of the retention arm 134, the labial-lingual dimension of the lumen 24a is formed by the rotatable member 14 alone and so the tolerance on the labial-lingual dimension is comparatively tighter than orthodontic brackets that form the labial-lingual dimension with two components (e.g., a bracket body and a ligating slide). By way of example only, and not limitation, the height dimension of the lumen 24a in the closed position shown in Fig. 6A may measure about 0.711 mm (0.028 inch). When the archwire 18 is a 0.483 mm x 0.635 mm (0.019 inch x 0.025 inch) archwire, the orthodontic bracket 10 may passively ligate the archwire 18 by virtue of at least about 0.0762 mm (0.003 inch) difference in the labial-lingual dimension. It will be appreciated that a similar configuration of the lumen 24b may be formed by the retention arm 138 on the distal side 138 of the bracket body 12.

As is shown in Fig. 6B, the surfaces 84a and 84b are slightly offset (e.g., labially offset) from the base surface 44. This offset from the base surface 44 produces two points of contact between the rotatable member 14 and the archwire 16 in the lingual direction. In embodiments of the invention, the contact points between the archwire 16 and the rotatable member 14 are at the mesial side 36 and the distal side 38. It is known that providing two points of contact improves rotation control of the orthodontic bracket 10. However, there is an additional advantage to the configuration shown. Because the contact points are on the outer-most sides of the orthodontic bracket 10, the overall size of the orthodontic bracket 10 may be reduced as compared to self-ligating brackets that utilize a ligating slide or a clip in which the contact points on the slide or clip are positioned internally with respect to the sides of the bracket body. This size reduction may be achieved while the clinical control is maintained or improved. By way of example, the mesial-distal dimension may be reduced by from about 10% to about 30% compared to commercially available self-ligating brackets.

In the closed position shown in Figs. 5-7, the locking mechanism 20 may prevent unintentional rotation from the closed position. With reference to Fig. 5, the pin 22 engages the enlarged portion 92 of the retention aperture 90. Further rotation of the rotatable member 14 in the clockwise direction is prevented by the retention aperture 90. Rotation of the rotatable member 14 in the counterclockwise direction is inhibited due to the interference between the spring pin 22 and the narrow region 98.

During treatment, the clinician may rotate the rotatable member 14 in the counterclockwise direction toward the opened position shown, for example, in Fig. 1, by applying torque, such as, with fingers or a tool, above a threshold amount by which the pin 22 deforms and squeezes into the narrow region 98. For example, application of a torque on the rotatable member 14 above a threshold amount may radially compress the spring pin 22 by its forced contact with the narrow region 98.

Once the pin 22 is compressed so as to fit within the narrow region 98, continued application of torque causes the spring pin 22 to slide through the narrow region 98. As the spring pin 22 approaches the enlarged portion 94, the spring pin 22 may expand and spontaneously fill the enlarged portion 94. This movement and spontaneous expansion of the spring pin 22 may produce a noticeable click by which the clinician may be assured that the rotatable member 14 is in the opened position shown in Fig. 1. Although not shown, it will be appreciated that the same interaction may occur between the spring pin 22 and the retention aperture 108. Once in the opened position, the locking mechanism 20 may resist unintentional rotation of the rotatable member 14 in the clockwise and counterclockwise directions. Further, the clinician may insert and/or remove an archwire from the archwire slot 16 through the gap 142.

To rotate the rotatable member 14 from the opened position shown in Fig. 1 toward the closed position shown in Fig. 8, the clinician applies a torque above the threshold level necessary to squeeze the pin 22 into the narrow region 100. Once the pin 22 is squeezed into the narrow region 100, the clinician can continue to rotate the rotatable member 14 by forcing the pin 22 to slide through the narrow region 100 toward the enlarged portion 96. As the pin 22 approaches the enlarged portion 96, the spring pin 22 may expand and spontaneously fill the enlarged portion 96. This movement and expansion of the spring pin 22 may produce a noticeable click by which the clinician may be assured that the rotatable member 14 is in the closed position shown in Fig. 8. Once in the closed position, the locking mechanism 20 may prevent unintentional rotation from the closed position. Further rotation of the rotatable member 14 in the counterclockwise direction is prevented by the retention aperture 90. Rotation of the rotatable member 14 in the clockwise direction is resisted by interference between the spring pin 22 and the narrow region 100.

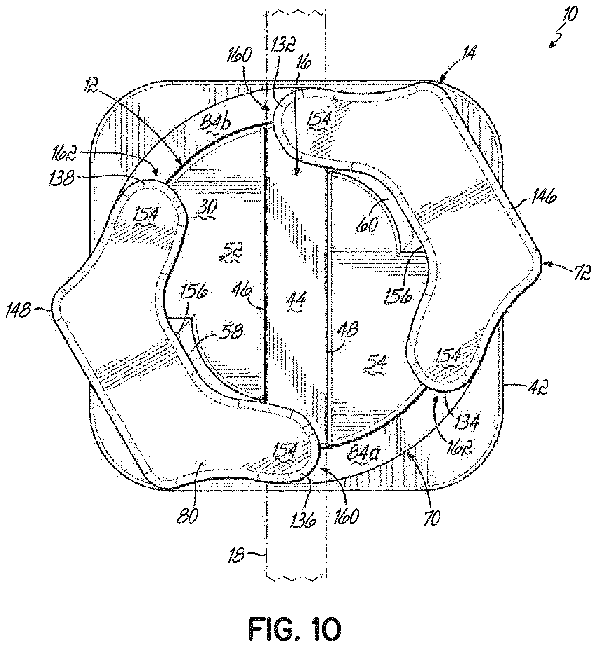

In the closed position shown in Figs. 8-10, the retention arms 132, 136 may at least partially directly face the base surface 44 of the archwire slot 16 (shown best in Fig. 10). The retention arms 132, 136 may also face corresponding upper surfaces 84a, 84b to retain the archwire 18 in the orthodontic bracket 10. In one embodiment, in this closed position, each of the labial-lingual dimension and the occlusal-gingival dimension of the lumen 26a, 26b is reduced. For example, the lumen 26a is formed by the lower surfaces 152 of the retention arm 136; the upper surface 84a of the sidewall 80 (instead of the base surface 44); the side surface 126 of the stud 78 (instead of the slot surface 46); and the slot surface 48. As shown, the lumen 26a formed by the cutout 160 is smaller in one or more dimensions than the lumen 24a formed by the retention arm 134 (shown in Fig. 6A). The labial-lingual dimension may be reduced from one closed position to the other closed position of the rotatable member 14. By way of example only, and not limitation, the labial-lingual dimension of the lumen 26a in this position may measure about 0.026 inch (0.660 mm). With a 0.483 mm x 0.635 mm (0.019 inch x 0.025 inch) archwire, as described above, the orthodontic bracket 10 may actively ligate the archwire 18.

In addition or alternatively, in one embodiment, the occlusal-gingival dimension of the lumen 26a, 26b may be reduced relative to the occlusal-gingival dimension of the lumen 24a, 24b formed by the retention arms 134, 138. In this regard, the distance from the side surface 126 of the rotatable member 14 to the plane of the slot surface 48 defines the occlusal-gingival dimension of the lumen 26a. By way of example, the occlusal-gingival dimension of the lumen 26a shown in Fig. 9 may be 0.0254 mm (0.001 inch) to 0.0508 mm (0.002 inch) less than the occlusal-gingival dimension of the lumen 26a shown in Fig. 6A and formed by the retention arms 134, 138. Specifically, for a 0.019 inch by 0.025 inch (0.483 mm x 0.635 mm) archwire, the occlusal-gingival dimension of the lumen 26a shown in Fig. 9 may be 0.020 inch (0.508 mm). It will be appreciated that embodiments of the invention are not limited to a reduction in both the occlusal-gingival dimension and the labial-lingual dimension, as one or the other dimension may be reduced depending on the positions of the surfaces 152 and the side surfaces 126 when the rotatable member 14 is in a closed position.

Advantageously, the orthodontic bracket 10 may obviate the need to change archwires during treatment. A single archwire may be utilized during the initial stage of treatment in which passive ligation is desired. This may be obtained by rotating the rotatable member 14 to one closed position in which a lumen is larger in labial-lingual dimension and is larger in occlusal-gingival dimension than the archwire. Once treatment progresses to a point that active ligation would be beneficial, the clinician may rotate the rotatable member 14 to a second closed position in which the labial-lingual dimension and/or the occlusal-gingival dimension of the lumen is reduced so as to more closely approximate the height and/or width dimensions of the archwire. In this position, the rotatable member 14 actively ligates the archwire and increases the clinical control of the orthodontic bracket. The clinician need not change the archwire to produce active ligation. Furthermore, active and passive ligation may be selected on a bracket-by-bracket basis along a patient's arch.

In view of the above, the clinician may rotate the rotatable member 14 from one closed position shown in Fig. 5 (e.g., for passive ligation) to another closed position shown in Fig. 8 (e.g., for active ligation) by a clockwise or counterclockwise rotation in which the orthodontic bracket 10 produces two audible clicks and/or two tactile responses from one closed position to the other closed position. That is, one click/response when the rotatable member 14 is rotated to the opened position (shown in Fig. 1) and another click/response when the rotatable member 14 is rotated to the other closed position. With a click-click type of response from the locking mechanism 20, the clinician may be assured that the rotatable member 14 has been successfully rotated (clockwise or counterclockwise) from one closed position to the other closed position.

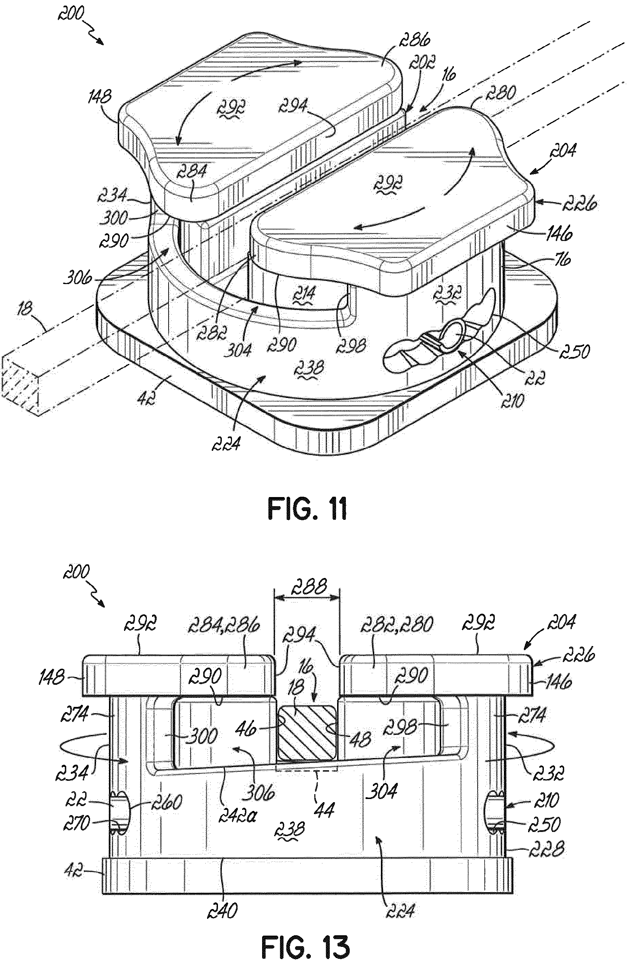

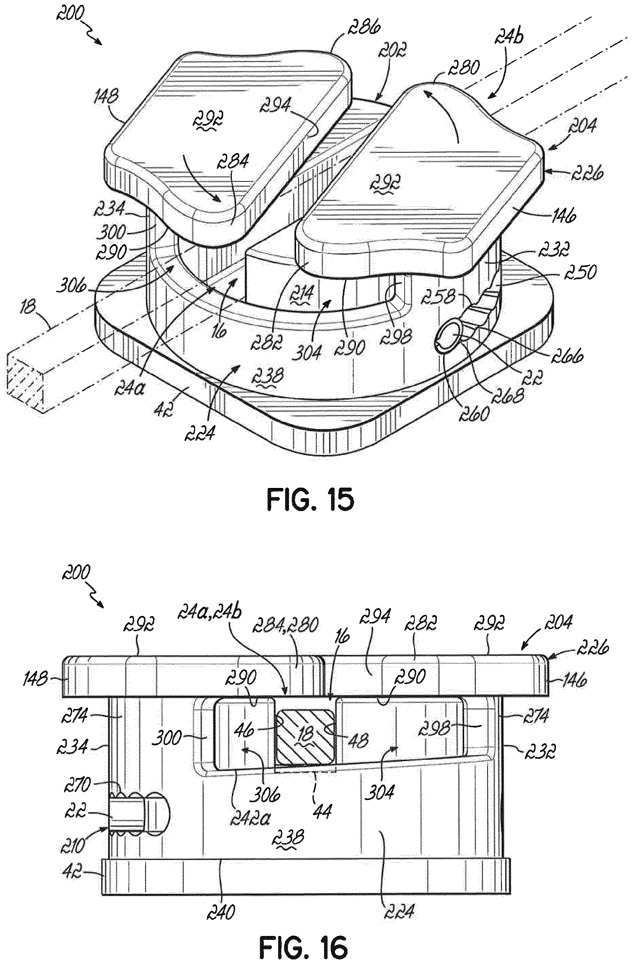

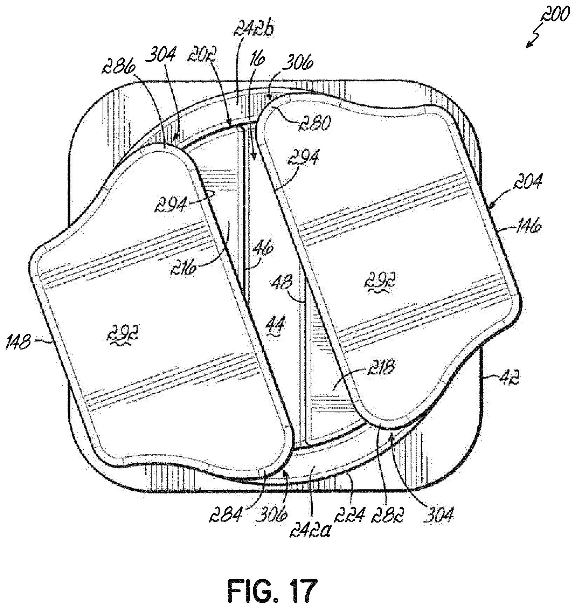

In one embodiment, and with reference to Figs. 11-19, in which like reference numerals refer to like elements throughout the figures, an orthodontic bracket 200 includes a bracket body 202 similar to the bracket body 12 described above with reference to Figs. 1-10 and a rotatable member 204. The rotatable member 204 is rotatable relative to the bracket body 202 from an opened position (Figs. 11, 13, and 14) in which the archwire 18 is insertable into the archwire slot 16, to multiple closed positions (Figs. 15-19). The exemplary embodiment includes four closed positions in which the archwire 18 is retained within pairs of lumens defined by the archwire slot 16 and different portions of the rotatable member 204 for each closed position.

As is described below, the dimensions of each of the lumens vary. In this regard, in one closed position, the rotatable member 204 forms a pair of large lumens spaced apart on either side of the bracket body 202, similar to the pairs of lumens described above. The pair of lumens is larger in one or more dimensions relative to the archwire 18 such that there is clearance between the lumen and the archwire 18. When the rotatable member 14 is in this position, the orthodontic bracket 200 passively ligates the archwire 18.

In another closed position, the rotatable member 204 forms a pair of smaller lumens relative to the first pair of lumens described above. Each smaller lumen more closely approximates the dimensions of the archwire 18 such that there may be little or no clearance between the lumen and the archwire 18 in one or more directions. When the rotatable member 204 is in this position, the orthodontic bracket 200 actively ligates the archwire 18. In addition, the rotatable member 204 is rotatable to two intermediate closed positions that may each form a lumen having the same or different dimensions than either of the lumens for active and passive ligation. Advantageously, the clinician may select whether the orthodontic bracket 200 passively ligates the archwire or actively ligates the archwire. Specifically, the clinician may adjust the dimensions of lumens to known values at specific increments within a range of labial-lingual dimensions. In this way, the clinician may select an optimum clearance between the archwire and each lumen and so may decouple the archwire from the desired degree of ligation. That is, the desired degree of ligation may be obtained regardless of the size of the archwire.

The orthodontic bracket 200 includes a locking mechanism 210 that is similar to the locking mechanism 20 described above with reference to Figs. 1-10. In the exemplary embodiment shown, the locking mechanism 210 may include a resilient member, such as, the spring pin 22 that slidably engages the rotatable member 204 in one or more positions. The orthodontic bracket 200 differs from the orthodontic bracket 10 shown in Figs. 1-10 in at least the additional positive stops of the locking mechanism 210 and in the change in the dimensions of the lumens at each of the closed positions.

In particular, during orthodontic treatment, in accordance with an aspect of the invention, the locking mechanism 210 has multi-functional capabilities in regard to the rotatable member 204. More particularly, the multi-functional locking mechanism 210 is configured to not only rotationally secure the rotatable member 204 relative to the bracket body 202 such that the rotatable member 204 may not be inadvertently rotated, but also provides a discernible indication of the rotational position of the rotatable member 204 relative to the bracket body 202. The clinician may then associate the indication with one of the closed positions and optionally the opened position of the rotatable member 204.

In regard to the former point, the locking mechanism 210 provides one or more positive stops in the rotation of the rotatable member 204 relative to the bracket body 202. In the exemplary embodiment shown, the locking mechanism 210 defines multiple positive stops between the rotatable member 204 and the bracket body 202. Each positive stop may correspond to one of the opened position and the closed positions having a lumen of a predetermined dimension.

In addition to maintaining the rotatable member 204 in one position, the locking mechanism 210 may couple the rotatable member 204 to the bracket body 202 and restrain the rotatable member 204 when the archwire 18 pulls on the rotatable member 204. As shown, the spring pin 22 may be oriented perpendicular to a force transferred from the archwire 18 to the rotatable member 204. For labial applications of the orthodontic bracket 200, the pin 22 may be oriented to counteract forces acting in the labial direction that tend to pull the archwire 18 labially out of the archwire slot 16. More specifically, the pin 22 may be in a plane generally parallel to a plane of a base surface of the archwire slot 16 and/or in a plane generally parallel with a tangent of the adjacent tooth surface.

As shown in Fig. 12, the bracket body 202 is similar to the bracket body 12 (shown in Fig. 2) and may have a right circular cylindrical configuration defined by outer surface 214, a generally planar support surface 216 extending in a generally gingival-occlusal direction from slot surface 46, and a generally planar support surface 218 extending in a generally gingival-occlusal direction from slot surface 48. The outer surface 214 and the planar support surfaces 216, 218 are configured to slidably support the rotatable member 204 on the bracket body 202 and are sized to allow the rotatable member 204 to rotate between the opened position and multiple other positions.

The bracket body 202 may define a central axis 220 extending in the labial-lingual direction, as shown in Fig. 12. The central axis 220 may intersect the archwire slot 16 approximately at its geometric center in a substantially perpendicular manner and may define an axis of rotation about which the rotatable member 204 rotates relative to the bracket body 202 as indicated by the arrows in Fig. 11.

With reference to Figs. 11 and 12, the rotatable member 204 is generally a ring-shaped structure configured to form many of the exterior-most surfaces of the orthodontic bracket 200. The rotatable member 204 includes a body portion 224 that fits over and surrounds a portion of the bracket body 202, and a ligating portion 226 that ligates the archwire 18 (e.g., actively and/or passively, described below) when the rotatable member 204 is in one of the closed positions.

In one embodiment, the body portion 224 includes a base 228 that defines an axis 230 and a pair of spaced-apart columns or studs 232, 234. The base 228 may include a ring-shaped sidewall 238. The ring-shaped sidewall 238 has a lower surface 240 and ramp-like upper surfaces 242a, 242b between spaced-apart studs 232, 234. As is described below, instead of the base surface 44, the ramp-like upper surfaces 242a, 242b form the lingual wall of a lumen. The ring-shaped sidewall 238 is dimensioned to receive and surround a portion of the outer surface 214 of the bracket body 202 with the lower surface 240 confronting the pad 42.

As is shown best in Fig. 13, the ramp-like upper surfaces 242a, 242b are at an angle relative to the lower surface 240. That is, the upper surface 242a and/or 242b are not parallel to the lower surface 240. By way of example, this relative orientation between one or both surfaces 242a, 242b and the lower surface 240 may produce an angle of about 84° to about 63° measured relative to the archwire slot side walls 46 and/or 48. It will be appreciated that the slope of the surfaces 242a, 242b depends on the range of labial-lingual dimensions desired. In the exemplary embodiment shown, the ramp-like upper surfaces 242a, 242b extend between studs 232 and 234 in a linear manner, though at a non perpendicular angle. Accordingly, the ramp-like upper surfaces 242a, 242b are not parallel to the base surface 44. By way of further example, this orientation may produce an angle from about 6° to about 27° relative to the base surface 44. The ring-shaped sidewall 238 may therefore be wedge-shaped on each side of the rotatable member 204 between stud 232 and stud 234. The ramp-like upper surfaces 242a, 242b form a lingual wall of the archwire slot 16. This ramp-like configuration may be at a predetermined taper to provide known labial-lingual dimensions of the archwire slot 16 for one or more positive stops of the locking mechanism 210.

In one embodiment, the locking mechanism 210 includes at least one retention aperture 250 formed in the rotatable member 204 that receives a portion of the pin 22 as is shown in Fig. 11. The retention aperture 250 is an elongated through-bore and extends circumferentially around a portion of the ring-shaped sidewall 238. While the retention aperture 250 is shown symmetrically positioned relative to the stud 232, embodiments of the invention are not limited to any particular relative position of the studs 232, 234 and the retention aperture 250. For example, the retention aperture 250 may be positioned in the ring-shaped sidewall 238 between the studs 232 and 234.

The orthodontic bracket 200 may be assembled by placing the rotatable member 204 on the bracket body 202 according to the arrow in Fig. 12 with the retention aperture 250 aligned with the passageway 68. The pin 22 may be inserted through the retention aperture 250 into the passageway 68. Cooperation between a portion of the spring pin 22 that extends from the passageway 68 and the retention aperture 250 retains the rotatable member 204 in at least one of the opened position and the closed positions and also couples the rotatable member 204 to the bracket body 202.

By way of example and with reference to Fig. 12, the locking mechanism 210 may retain the rotatable member 204 in each of the opened and closed positions. In that regard, the retention aperture 250 includes multiple spaced apart enlarged portions 252, 254, 256, 258, 260 separated by narrow regions 262, 264, 266, 268. The rotatable member 204 therefore differs from the rotatable member 14 in at least the number of enlarged portions and therefore the number of positive stop positions of the rotatable member 204 relative to the bracket body 202. As is described in detail below, one or more of the enlarged portions 252, 254, 256, 258, 260 may correspond to the opened position or one of the closed positions. The enlarged portions 252, 254, 256, 258, 260 may also provide numerous closed positions. In this way, each of the positions of the rotatable member 204 corresponds to the pin 22 being located in one of the enlarged portions 252, 254, 256, 258, 260.

The enlarged portions 252, 254, 256, 258, 260 are enlarged in dimension relative to the narrow regions 262, 264, 266, 268 and may result from corresponding overlapping bores spaced along an axis around a circumferential portion of the side wall 238. The size of each of the enlarged portions 252, 254, 256, 258, 260 may approximate or be slightly larger than the largest dimension of the spring pin 22 when it is relaxed or unstressed radially. Thus, when the spring pin 22 is in one of the enlarged portions 252, 254, 256, 258, 260, the spring pin 22 may be undeformed or unstressed. It will be appreciated that the enlarged portions 252, 254, 256, 258, 260 may be sized to produce elastic deformation (e.g., radial compression) of the spring pin 22 as is more fully described above with reference to Figs. 1-10. In this regard, a cross-sectional dimension of the spring pin 22 may be reduced when positioned in one of the enlarged portions 252, 254, 256, 258, 260 relative to an unstressed condition.

Further, while the enlarged portions 252, 254, 256, 258, 260 of the retention aperture 250 are shown to have approximately the same overall diameter, embodiments of the invention are not restricted to each portion being the same dimension. For example, the enlarged portion 256 may have a reduced labial-lingual dimension relative to each of the enlarged portions 252, 254, 258, and 260. As a result, the enlarged portion 256 may radially compress the pin 22 to a greater degree than any of the enlarged portions 252, 254, 258, and 260. The reverse arrangement may also be utilized. Or, each of the enlarged portions 252, 254, 256, 258, and 260 may be differently dimensioned.

As shown best in Fig. 12, the narrow regions 262, 264, 266, and 268 separate adjacent enlarged portions 252, 254, 256, 258, 260. Specifically, the narrow region 262 separates the enlarged portion 252 from the enlarged portion 254; the narrow region 264 separates the enlarged portion 254 from the enlarged portion 256; the narrow region 266 separates the enlarged portion 256 from the enlarged portion 258; and the narrow region 268 separates the enlarged portion 258 from the enlarged portion 260. Unlike the embodiment of the invention shown in Figs. 1-10, the narrow regions 262, 264, 266, and 268 may be pinch points generally defined by incomplete overlap between any two of the adjacent enlarged portions 252, 254, 256, 258, 260. Nonetheless, the reduced labial-lingual separation produces a greater degree of elastic deformation of the spring pin 22 than any compression of the pin 22 when it is in one of the enlarged portions 252, 254, 256, 258, 260.

The narrow regions 262, 264, 266, and 268 limit unintentional relative movement between the pin 22 and the rotatable member 204 due to the interference fit between the narrow regions 262, 264, 266, and 268 and the spring pin 22. For relative movement to occur from one of the enlarged portions 252, 254, 256, 258, 260, the pin 22 must be squeezed into one of the narrow regions 262, 264, 266, or 268. The pin 22 may therefore be reduced in one or more cross-sectional dimensions to fit within one of the narrow regions 262, 264, 266, and 268.

Similarly, when the pin 22 is between enlarged portions 254 and 256, the spring pin 22 may slide between either of those two enlarged portions. Embodiments of the present invention are not limited to the narrow regions 262, 264, 266, and 268 having the same labial-lingual dimension. It will be appreciated that the narrow regions 262, 264, 266, and 268 may be differently dimensioned so that the pin 22 is compressed to a greater degree in one narrow region than in another narrow region.

During treatment, the clinician may rotate the rotatable member 204 by applying torque sufficient to deform the pin 22 to fit within one of the narrow regions 262, 264, 266, and 268. Once the pin 22 is deformed (e.g., radially compressed) or otherwise reduced in dimension, the clinician may continue rotation of the rotatable member 204 by overcoming the friction associated with sliding movement of the deformed pin 22 and the surfaces defining one of the narrow regions 262, 264, 266, and 268. The torque required to slide the pin 22 in either of the narrow regions 262, 264, 266, and 268 is different (e.g., less) than the torque required to move the pin 22 from one of the enlarged portions 252, 254, 256, 258, 260 into one of the narrow regions 262, 264, 266, or 268. This difference in the magnitude of the torque between compression of the pin 22 and sliding of the pin 22 may be discernable to the clinician.

Furthermore, the pin 22 may spontaneously move from the narrow region 262, 264, 266, or 268 into one of the enlarged portions 252, 254, 256, 258, 260. This spontaneous movement may produce a tactile sensation and/or an audible response and thereby assure the clinician that the rotatable member 204 is in the opened position or one of the closed positions, as is described in more detail below. According to the embodiment shown in Fig. 12, the narrow regions 262, 264, 266, or 268 cover only a small radial portion of the retention aperture 250 as compared to the aperture 90 shown in Fig. 1. As such, small rotational movements of the rotatable member 204 may move the pin 22 between enlarged portions 252, 254, 256, 258, 260.

In the exemplary embodiment shown and with continued reference to Fig. 12, the locking mechanism 210 may include a second retention aperture 270 that cooperates with another portion of the spring pin 22 (not shown) that extends from the passageway 68 on the gingival side 34 of the bracket body 202. The second retention aperture 270 may be substantially similar to the retention aperture 250. In that regard, the second retention aperture 270 may include one or more enlarged portions separated by a restriction, such as, a narrow region.

The second retention aperture 270 may be redundant in function to the retention aperture 250 and may be symmetrical to the retention aperture 250 about the axis 230. It will be appreciated that this redundancy or symmetry may enhance the tactile and/or audible response and ensure that the load on the rotatable member 204 from the archwire 18 is transferred approximately equally in the direction of the passageway 68 from the rotatable member 204 to the bracket body 202.

Referring to Fig. 13 and with regard to the ligating portion 226, the studs 232, 234 generally extend upwardly (e.g., labially) from the ramp-like upper surfaces 242a, 242b of the cylindrical base as an extension of the ring-shaped sidewall 238 and are generally symmetrically arranged. Each stud 232, 234 includes an outer surface 274 having a generally arcuate configuration such that the outer surface 274 is smooth and continuous with the ring-shaped sidewall 238 of the base 228 (e.g., it is an extension of the base 228). The arcuate outer surface 274 of the studs 232, 234 forms an exterior surface of the orthodontic bracket 200.

As shown in Fig. 12, each stud 232, 234 further includes an inner surface 276 which confronts the outer surface 214 of the bracket body 202 in the opened position and the closed positions. The inner surface 276 may have a generally arcuate configuration such that the inner surface 276 is smooth and continuous with the sidewall 238 of the base 228. Each stud 232, 234 includes a side surface 298 and a side surface 300 extending between the outer surface 274 and the inner surface 276.

With reference to Figs. 11 and 12, the ligating portion 226 of the rotatable member 204 includes two pairs of retention arms 280, 282 and 284, 286 that extend in a perpendicular manner from the studs 232, 234 and that define a gap 288. When the rotatable member 204 is in the opened position, as is shown in Fig. 11, the gap 288 allows access to the archwire slot 16 such that the clinician may insert the archwire 18 into the archwire slot 16.

With reference to Figs. 11-13, each of the retention arms 280, 282, 284, and 286 includes a lower surface 290, an upper surface 292, and a sidewall 294 extending therebetween. The upper surfaces 242a, 242b and the lower surface 292 of the retention arms 282 and 286 and the side surface 298 of each stud 232, 234 form a cutout 304. And, the upper surfaces 242a, 242b and the lower surface 290 of the retention arms 280 and 284 and the side surface 300 of each stud 232, 234 form a cutout 306.

As is shown in Fig. 13, in one embodiment, the lower surfaces 290 of retention arms 280, 282, 284, 286, reside in the same plane. The lower surfaces 290 may confront and slidably contact the corresponding planar support surfaces 216, 218 during rotational movement of the rotatable member 204 between each of the closed positions and the opened position.

As described above, the ramp-like upper surfaces 242a, 242b of the ring-shaped sidewall 238 are angled relative to the lower surfaces 290 of each retention arm 280, 282, 284, and 286. This angled relationship produces a variable labial-lingual distance between the lower surface 290 and the corresponding ramp-like upper surfaces 242a, 242b in one or both cutouts 304 and 306. The labial-lingual dimension may vary linearly according to the angle of the ramp-like upper surface 242 between a maximum dimension and a minimum dimension. While not being limited to a particular configuration, the cutout 306 may determine the maximum dimension and the cutout 304 may determine the minimum dimension. From a numerical standpoint, by way of example, the maximum labial-lingual dimension may be about 0.0533 mm (0.0021 inch) and the minimum labial-lingual dimension may be about 0.0432 mm (0.0017 inch).

In view of the ramp-like upper surfaces 242a, 242b, at least one dimension of the lumen formed by the cutouts 304 is different from the corresponding dimension of the lumen formed by the cutouts 306. By adjusting the angular relationship between the lower surface 290 of the retention arms 280, 282, 284, 286 and the ramp-like upper surfaces 242a, 242b of the ring-shaped sidewall 238 different labial-lingual height dimensions for the lumens may be obtained. Advantageously, specific labial-lingual height dimensions may therefore correspond to each positive stop position of the locking mechanism 210. In one embodiment, the incremental change in position as determined by the spacing of the enlarged portions is related to a specific labial-lingual dimension between the lower surface 290 and the ramp-like upper surfaces 242a, 242b of the ring-shaped sidewall 238. That is, for a given rotational movement between one enlarged portion and an adjacent enlarged portion, the labial-lingual dimension may change by a known amount. In this way, the clinician can select the size of the lumen and thus the clearance between the archwire and the lumen at any time during treatment.

Specifically, in this regard, during treatment, the rotatable member 204 may be rotated (e.g., counterclockwise) from the opened position shown in Fig. 11 to a closed position shown in Figs. 15-17. In the closed position shown, and with reference specifically to Fig. 16, the retention arms 280 and 284 extend over the archwire slot 16 to retain the archwire 18 therein. A pair of spaced-apart lumens 24a, 24b is formed by the cutouts 306 and slots 46 and 48. By forming the lingual and labial sides of the lumen 24a and 24b with lower surface 290 of the retention arms 280 and 284 and the ramp-like upper surface 242 of the ring-shaped sidewall 238 (instead of the base surface 44), the labial-lingual dimension of the lumen 24a and 24b is formed by the rotatable member 204 alone. The tolerance on the labial-lingual dimension is comparatively tighter than orthodontic brackets that form the labial-lingual dimension with two components (e.g., a bracket body and a ligating slide). By way of example only, and not limitation, the height dimension of the lumen 24a, 24b in the closed position shown in Fig. 16 may measure about 0.028 inch (0.711 mm). When the archwire 18 is a 0.483 mm x 0.635 mm (0.019 inch x 0.025 inch) archwire, the orthodontic bracket 200 may passively ligate the archwire 18 by virtue of at least about a 0.003 inch difference in the labial-lingual dimension. As an additional advantage, the entirety or a portion of the ramp-like upper surfaces 242a, 242b may be positioned labially of the base surface 44. In this regard and in a similar manner as the embodiment of the invention shown in Figs. 1-10, the embodiment shown in Fig. 11 provides two-point contact at locations proximate the mesial and distal sides of the orthodontic bracket 200 and accordingly the orthodontic bracket 200 may be made comparatively smaller by the same proportions as described above.

In this position, the locking mechanism 210 may prevent unintentional rotation from the closed position. As shown in Fig. 15, the pin 22 engages the enlarged portion 260 of the retention aperture 250. Further rotation of the rotatable member 204 in the counterclockwise direction is prevented by the retention aperture 250. And, rotation of the rotatable member 204 in the clockwise direction is inhibited due to the interference between the spring pin 22 and the narrow region 268.

The clinician may rotate the rotatable member 204 in the clockwise direction toward the opened position shown, for example, in Fig. 11, by applying torque, such as, with fingers or a tool, above a threshold amount by which the pin 22 deforms and squeezes into the narrow region 268. For example, application of a torque on the rotatable member 14 above a threshold amount may radially compress the spring pin 22 by its forced contact with the narrow region 268.

Once the pin 22 is deformed by squeezing it into the narrow region 268, continued application of torque causes the spring pin 22 to slide through the narrow region 268. As the spring pin 22 approaches the enlarged portion 258, the spring pin 22 may expand and spontaneously fill the enlarged portion 258. This movement and spontaneous expansion of the spring pin 22 may produce a noticeable click by which the clinician may be assured that the rotatable member 204 is in another closed position. This closed position (not shown) may be intermediate to the closed position shown in Fig. 15 and the opened position shown in Fig. 11. Once in the intermediate closed position, the locking mechanism 210 may resist unintentional rotation of the rotatable member 204 in the clockwise and counterclockwise directions. Although not shown, it will be appreciated that the same interaction may occur between the spring pin 22 and the retention aperture 270.

Further application of torque above a threshold amount on the rotatable member 204 in the clockwise direction causes the spring pin 22 to squeeze into the narrow region 266. With continued rotation, the deformed spring pin 22 slides through the narrow region 266 and enters the enlarged portion 256 which, in the exemplary embodiment, corresponds to the rotatable member 204 being in the opened position shown in Fig. 11. Once in the opened position, the locking mechanism 210 may resist unintentional rotation of the rotatable member 204 in the clockwise and counterclockwise directions. Further, the clinician may insert and/or remove an archwire from the archwire slot 16 through the gap 288.

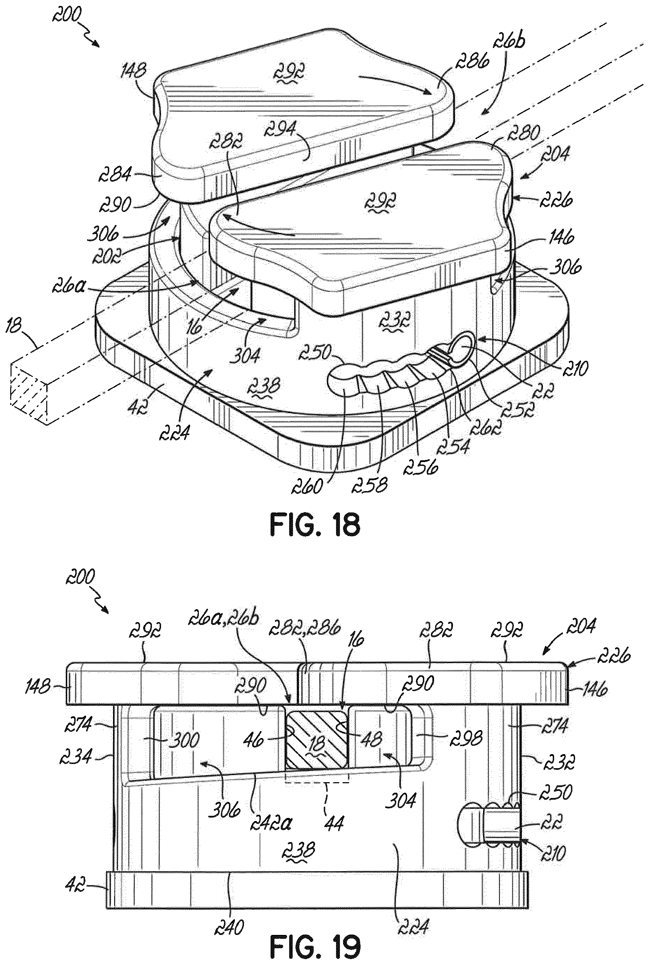

To rotate the rotatable member 204 from the opened position toward another closed position shown in Fig. 18, the clinician applies a torque above a threshold level necessary to squeeze the spring pin 22 into the narrow region 262. Once the spring pin 22 is squeezed into the narrow region 266, the clinician can continue to rotate the rotatable member 204 by forcing the spring pin 22 to slide through the narrow region 266 toward the enlarged portion 254. As the spring pin 22 approaches the enlarged portion 254, the spring pin 22 may expand and spontaneously fill the enlarged portion 254. This position of the locking mechanism 210 may form a positive stop that corresponds to an intermediate closed position. The movement and expansion of the spring pin 22 into the enlarged portion 254 may produce a noticeable click by which the clinician may be assured that the rotatable member 204 is in the intermediate closed position (not shown). Once in the intermediate closed position, the locking mechanism 210 may provide a threshold level of resistance to prevent unintentional rotation of the rotatable member 204 in each of the clockwise and the counterclockwise directions.

To rotate the rotatable member 204 into the closed position shown in Fig. 18, the clinician applies torque at or above the threshold level to deform the spring pin 22. The spring pin 22 is thereby squeezed into the narrow region 262. Once squeezed into the narrow region 262, the clinician may continue to rotate the rotatable member 204 in the clockwise direction. As the spring pin 22 approaches the enlarged portion 252, the spring pin 22 may expand and spontaneously fill the enlarged portion 252. This position of the locking mechanism 210 may form a positive stop that corresponds to a closed position described below. The movement and expansion of the spring pin 22 into the enlarged portion 252 may produce a noticeable click by which the clinician may be assured that the rotatable member 204 is in the closed position shown in Fig. 18. Once the rotatable member 204 is in the closed position shown, rotation of the rotatable member 204 in the clockwise direction is prevented by the retention aperture 250. Rotation of the rotatable member 204 in the counterclockwise direction is resisted by interference between the spring pin 22 and the narrow region 262.

In the closed position shown in Figs. 18 and 19, the retention arms 282 and 286 extend over the archwire slot 16 to retain the archwire 18 therein. In one embodiment, in this closed position, each of the lumens 26a, 26b is reduced in the labial-lingual dimension relative to the lumen 24a, 24b shown in Fig. 16. For example, the lumen 26a is formed by the cutout 304 and the slot surfaces 46 and 48. As shown, the lumen 26a formed by the cutout 304 is smaller in one or more dimensions that the lumen 24a formed by cutout 306 (shown in Fig. 16). In this way, the labial-lingual dimension may be reduced from one closed position to the other closed position of the rotatable member 204. By way of example only, and not limitation, the labial-lingual dimension of the lumen 26a in this position may measure about 0.660 mm (0.026 inch). With 0.483 mm x 0.635 mm (0.019 inch x 0.025 inch) archwire, as described above, the orthodontic bracket 10 may actively ligate the archwire 18.

Advantageously, the orthodontic bracket 200 may eliminate the need to change archwires during treatment. A single archwire may be utilized during the initial stage of treatment in which passive ligation is desired. This may be obtained by rotating the rotatable member 204 to one closed position in which a pair of lumens is larger in labial-lingual dimension than the archwire. Once treatment progresses to a point that active ligation would be beneficial, the clinician may rotate the rotatable member 204 to a second closed position in which the labial-lingual dimension of a pair of lumens is reduced so as to more closely approximate the height and/or width dimensions of the archwire 18. In this position, the rotatable member 204 actively ligates the archwire and increases the clinical control of the orthodontic bracket 200. The clinician need not change the archwire to produce active ligation. Further in this regard, there may be a selection of multiple archwires that the clinician may utilize and still produce both active and passive ligation. That is, because there are multiple closed positions with differing labial-lingual dimensions, selection of the size of the archwire may be less critical. There may be a range of different archwire sizes that, when inserted into the archwire slot, produce passive ligation at one closed position and active ligation at another closed position. Thus, the clinician may not need to be overly concerned regarding the archwire size at any time during the treatment.

In view of the above, the clinician may rotate the rotatable member 204 from one closed position shown in Fig. 15 (e.g., for passive ligation) to another closed position shown in Fig. 18 (e.g., for active ligation) by a clockwise or counterclockwise rotation in which the orthodontic bracket 200 produces audible clicks and/or tactile responses to indicate the position of the locking mechanism 210. The orthodontic bracket 200 may provide more than two closed positions. In the exemplary embodiment shown, the rotatable member 204 has four closed positions. Each closed position corresponds to a positive stop of the locking mechanism 210, corresponds to a different labial-lingual dimension of the archwire slot 16, and corresponds to one click/response when the rotatable member 204 is rotated to indicate a position of the locking mechanism 204. With a clicking type of response from the locking mechanism 210, the clinician may be assured that the rotatable member 204 is properly positioned at a lumen of a known labial-lingual dimension.

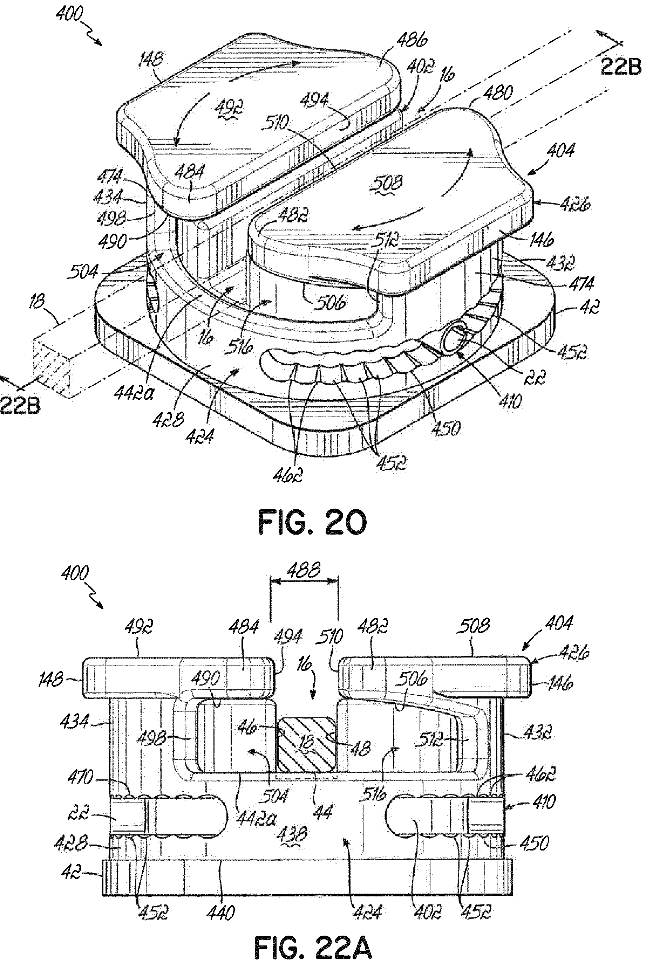

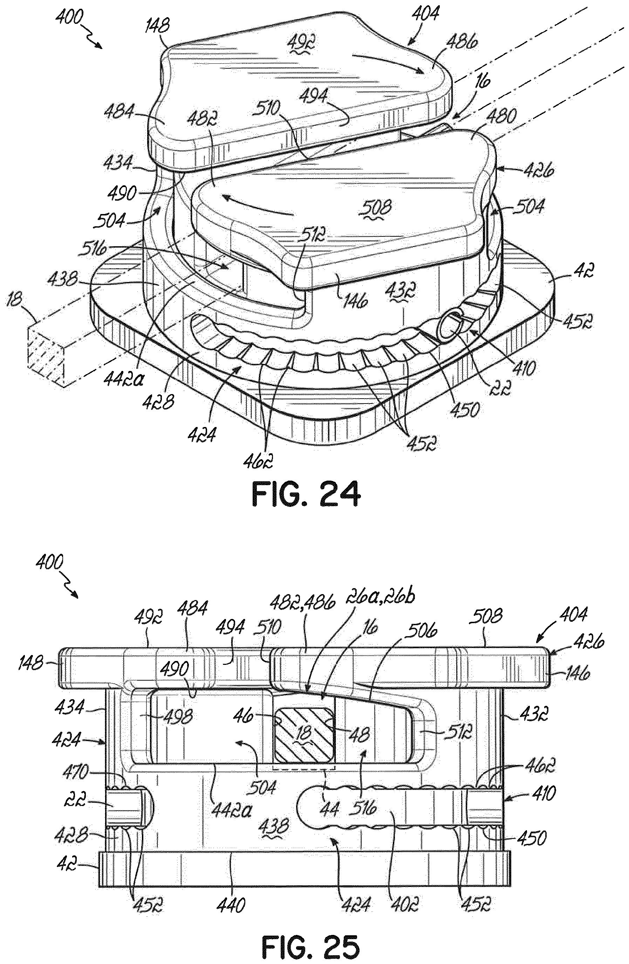

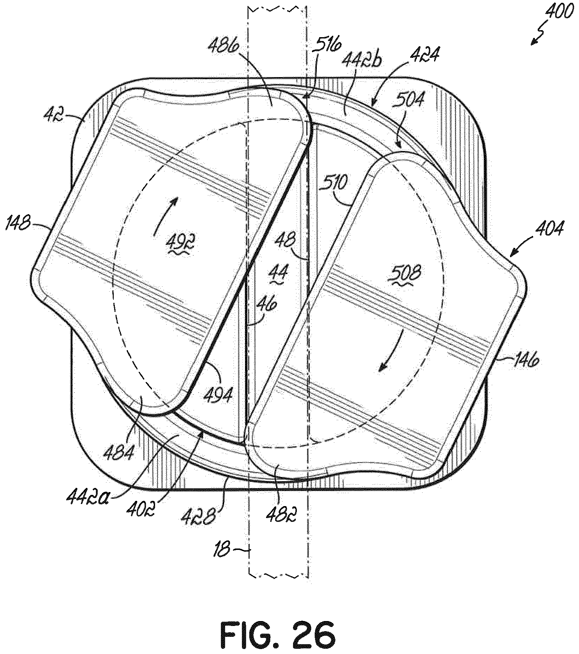

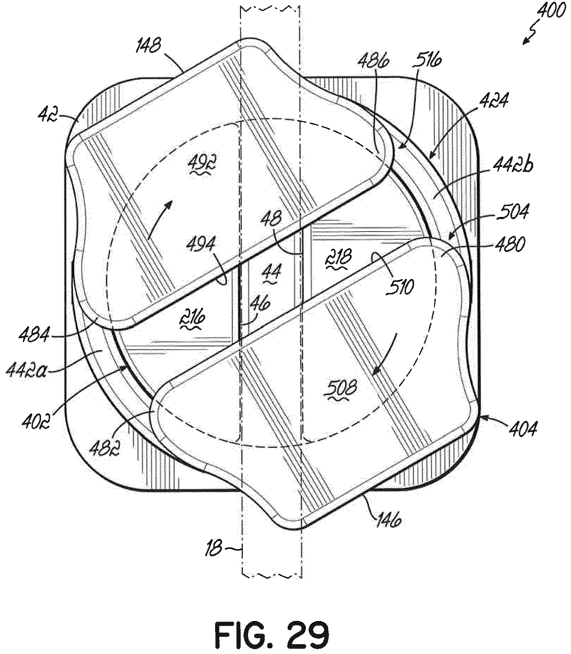

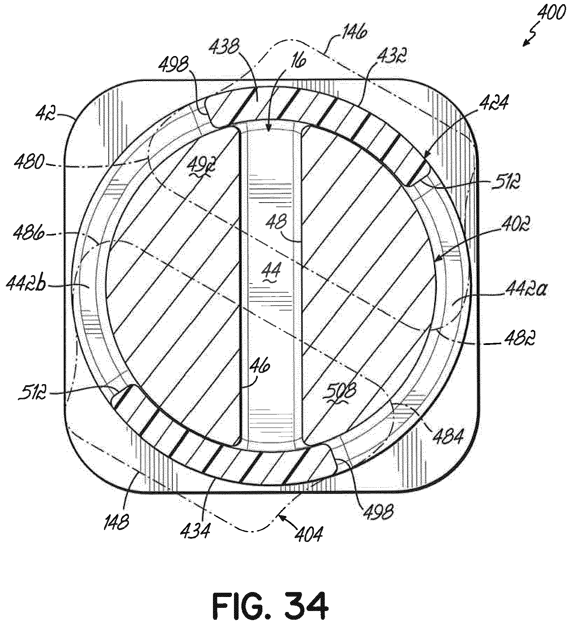

In an alternative embodiment, and with reference to Figs. 20-34, in which like reference numerals refer to like elements throughout the figures, an orthodontic bracket 400 includes a bracket body 402 similar to the bracket body 12 and the bracket body 202 and a rotatable member 404 similar to rotatable member 204, described above with reference to Figs. 1-19. The rotatable member 404 is rotatable relative to the bracket body 402 from an opened position (Figs. 20, 22, and 23) in which the archwire 18 is insertable into the archwire slot 16, to multiple closed positions (Figs. 24-34) in which the archwire 18 is retained within a lumen defined by the archwire slot 16 and the rotatable member 404. Similar to the orthodontic bracket 200, the dimensions of each of the lumens defined by the rotatable member 404 may be different.

In this regard, in one closed position, the rotatable member 404 forms a pair of spaced-apart large lumens relative to the archwire 18. The pair of lumens is larger in one or more dimensions relative to the archwire 18 such that there is clearance between each lumen and the archwire 18. When the rotatable member 14 is in this position, the orthodontic bracket 400 passively ligates the archwire 18. And, in one or more of the other closed positions, the rotatable member 404 forms a pair of smaller lumens relative to the first pair of lumens. This pair of smaller lumens more closely approximates the dimensions of the archwire 18 such that there may be little or no clearance between each lumen and the archwire 18 in one or more directions. When the rotatable member is in this position, the orthodontic bracket 400 may actively ligate the archwire 18. Advantageously, the clinician may select whether the orthodontic bracket 400 passively ligates the archwire or actively ligates the archwire. Specifically, the clinician may adjust the dimensions of the lumen to known values defined at specific increments within a range of dimensions provided by the rotatable member 404.

In addition, the orthodontic bracket 400 includes a locking mechanism 410 that is similar to the locking mechanism 210. In the exemplary embodiment shown, the locking mechanism 410 may include a resilient member, such as, the spring pin 22 that slidably engages the rotatable member 404 in one or more positions in a similar manner described above in the embodiment shown in Figs. 11-19. The orthodontic bracket 400 differs from the orthodontic bracket 200 shown in Figs. 11-19 in at least the configuration of the locking mechanism 410 and in the change in the dimensions of the lumens at each of the closed positions, each of which is described below. In this way, the clinician may select an optimum clearance between the archwire and each lumen and so may decouple the archwire from the desired degree of ligation. That is, the desired degree of ligation may be obtained regardless of the size of the archwire.

As with the locking mechanisms described above, in accordance with one feature, the locking mechanism 410 has multi-functional capabilities in regard to the rotatable member 404. The multi-functional locking mechanism 410 is configured to rotationally secure the rotatable member 404 relative to the bracket body 402 such that the rotatable member 404 may not be inadvertently rotated and provides a discernible indication of the rotational position of the rotatable member 404 relative to the bracket body 402. The clinician may then associate that indication with one of the closed positions and optionally the opened position of the rotatable member 404.

In regard to the former point, the locking mechanism 410 provides one or more positive stops in the rotation of the rotatable member 404 relative to the bracket body 402. In addition to maintaining the rotatable member 404 in one position, the locking mechanism 410 may couple the rotatable member 404 to the bracket body 402 and restrain the rotatable member 404 when the archwire 18 pulls on the rotatable member 404. As shown and described above, the pin 22 may be oriented perpendicular to a force transferred from the archwire 18 to the rotatable member 404.

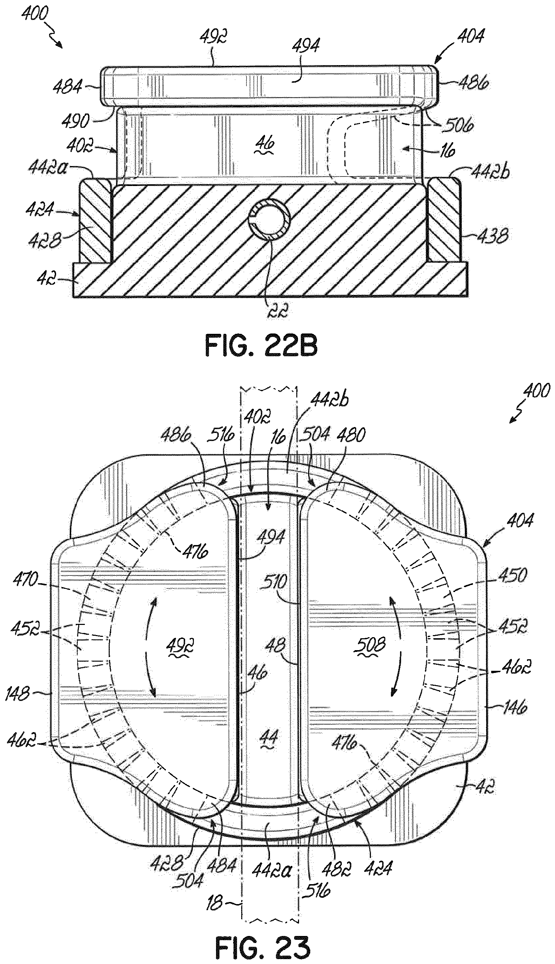

With reference to Figs. 20, 21, and 22, the rotatable member 404 is generally a ring-shaped structure that forms many of the exterior-most surfaces of the orthodontic bracket 400. The rotatable member 404 includes a body portion 424 that fits over and surrounds a portion of the bracket body 402, and a ligating portion 426 that ligates the archwire 18 (e.g., actively and/or passively, described below) when the rotatable member 404 is in a closed position. In one embodiment, the body portion 424 includes a base 428 that defines an axis 430 and a pair of spaced-apart columns or studs 432, 434. The base 428 may be ring-shaped and includes a sidewall 438 having a lower surface 440 and upper surfaces 442a, 442b. As is described below, the upper surfaces 442a, 44ab, instead of the base surface 44, form the lingual wall of a lumen (as is shown, for example, in Fig. 22). The sidewall 438 is dimensioned to receive and surround a portion of the outer surface 214 of the bracket body 402 with the lower surface 440 confronting the pad 42.

In one embodiment, the locking mechanism 410 includes at least one retention aperture 450 formed in the rotatable member 404 that receives a portion of the pin 22 (shown in Fig. 20). The retention aperture 450 is an elongated bore through and extends circumferentially around a portion of the sidewall 438. While the retention aperture 450 is shown symmetrically positioned relative to the stud 432, embodiments of the invention are not limited to any particular relative position of the studs 432, 434 and the retention aperture 450. For example, the retention aperture 450 may be positioned in the sidewall 438 between the studs 432 and 434.

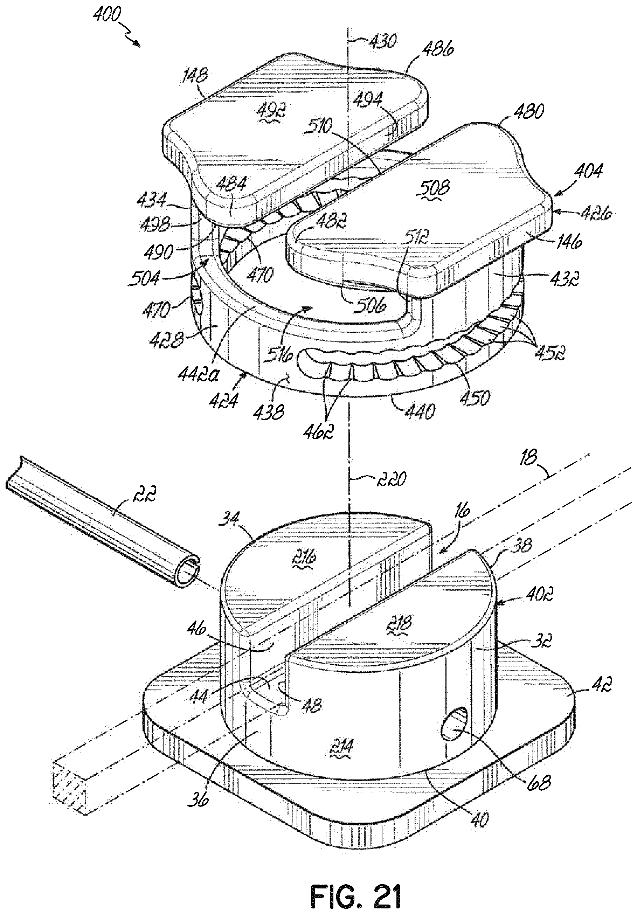

The orthodontic bracket 400 may be assembled by placing the rotatable member 404 on the bracket body 402 according to the arrow in Fig. 21 with the retention aperture 450 aligned with the passageway 68. The pin 22 may be inserted through the retention aperture 450 into the passageway 68.

By way of example and with reference to Fig. 20, the locking mechanism 410 may retain the rotatable member 404 in each of the opened and closed positions. In that regard, the retention aperture 450 includes multiple spaced-apart enlarged portions 452 separated by narrow regions 462. The retention aperture 450 differs from the retention aperture 250 shown in Fig. 12 and described above in at least the number of spaced apart enlarged regions 452. In the embodiment shown in Figs. 20-34, the number of positive stop positions of the rotatable member 404 relative to the bracket body 402 is greater than the number of positive stop positions for the embodiment of the invention shown in Figs. 12-19. As is described in detail below, one or more of the enlarged portions 452 may correspond to the opened position or one of the numerous closed positions. In this way, each of the positions of the rotatable member 404 relative to the bracket body 402 corresponds to the spring pin 22 being located in one of the enlarged portions 452.

The enlarged portions 452 are spaced apart by and larger in dimension relative to the narrow regions 462 and may appear as closely spaced overlapping bores in an elongated slot. Similar to the enlarged portions described above, the size of each of the enlarged portions 452 may approximate and be slightly larger than the largest dimension of the spring pin 22 when it is unstressed. Thus, when the spring pin 22 is in one of the enlarged portions 452, the spring pin 22 may be radially unstressed. It will be appreciated that the enlarged portions 452 may be sized to produce elastic deformation (e.g., radial compression) of the spring pin 22 as is more fully described above with reference to Figs. 1-10. In this regard, a dimension of the spring pin 22 may be reduced when positioned in one of the enlarged portions 452 relative to an unstressed condition, such as, before insertion in the passageway 68.

Further, while the enlarged portions 452 of the retention aperture 450 are shown to have approximately the same overall shape and dimension, embodiments of the invention are not restricted to the configuration shown. For example, some of the enlarged portions 452 may have a reduced labial-lingual dimension relative to other enlarged portions 452. As a result, the spring pin 22 may be deformed in one enlarged portion 452 more than the deformation in another enlarged portion 452.

With reference to Figs. 20 and 21, the narrow regions 462 may be pinch points generally defined by incomplete overlap between any two of the adjacent enlarged portions 452. The pinch point compresses the spring pin 22 more than the compression of the pin 22 when it is in one of the enlarged portions 452.

The narrow regions 462 limit unintentional relative movement between the pin 22 and the rotatable member 404 due to the interference fit between the narrow regions 462 and the spring pin 22. For relative movement to occur from one of the enlarged portions 452, the pin 22 must be squeezed into one of the narrow regions 462. The pin 22 may therefore be reduced in one or more cross-sectional dimensions to fit within one of the narrow regions 462.

Embodiments of the present invention are not limited to the narrow regions 462 having the same labial-lingual dimension. It will be appreciated that the narrow regions 462 may be differently dimensioned so that the pin 22 is deformed to a greater degree in one narrow region than in another narrow region.

During treatment, the clinician may rotate the rotatable member 404 by applying torque above the threshold amount to squeeze the pin 22 into one of the narrow regions 462. Once the pin 22 is deformed within a narrow region 462, the clinician may continue rotation of the rotatable member 404 by overcoming the friction associated with sliding movement of the deformed pin 22 and the surfaces defining one of the narrow regions 462. The torque required to slide the pin 22 in either of the narrow regions 462 is less than the torque required to move the pin 22 from one of the enlarged portions 452 into an adjacent one of the narrow regions 462. This difference in the magnitude of the torque between deformation of the pin 22 and sliding of the pin 22 may be discernable to the clinician. Furthermore, the pin 22 may spontaneously move from the narrow region 462 into one of the enlarged portions 452. This spontaneous movement may produce a tactile sensation and/or an audible response and thereby assure the clinician that the rotatable member 404 is in the opened position or one of the closed positions. According to the embodiment shown in Fig. 21, the narrow regions 462 cover only a small angular portion of the retention aperture 450 as compared to the aperture 90 shown in Fig. 1. As such, small rotational movements of the rotatable member 404 may move the pin 22 between enlarged portions 452.

In the exemplary embodiment shown and with continued reference to Fig. 21, the locking mechanism 410 may include a second retention aperture 470 that cooperates with another portion of the spring pin 22 (not shown) that extends from the passageway 68 on the gingival side 34 of the bracket body 402. The second retention aperture 470 may be substantially similar to the retention aperture 450. In that regard, the second retention aperture 470 may include one or more enlarged portions each of which may be separated by a restriction, such as, a narrow region.

The second retention aperture 470 may be redundant in function to the retention aperture 450. The second retention aperture 470 may be symmetrical to the retention aperture 450 about the axis 430. It will be appreciated that this redundancy may enhance the tactile and/or audible response and ensure that the load on the rotatable member 404 from the archwire 18 is transferred approximately equally in the direction of the passageway 68 from the rotatable member 404 to the bracket body 402.

With reference to Figs. 20 and 21 and to the ligating portion 426, the studs 432, 434 generally extend upwardly (e.g., labially) from the upper surfaces 442a, 442b of the hollow cylindrical base 428 as an extension of the sidewall 438 and are generally symmetrically arranged. Each stud 432, 434 includes an outer surface 474 having a generally arcuate configuration such that the outer surface 474 is smooth and continuous with the sidewall 438 of the hollow cylindrical base 428. The arcuate outer surface 474 of the studs 432, 434 forms an exterior surface of the orthodontic bracket 400.

As is shown in Figs. 21 and 23, each stud 432, 434 further includes an inner surface 476 which confronts the outer surface 214 of the bracket body 402 in the opened position and the closed positions. The inner surface 476 may have a generally arcuate configuration such that the inner surface 476 is smooth and continuous with the sidewall of the hollow cylindrical base 428. The stud 434 includes a sidewall 498 and a sidewall 500 extending between the outer surface 474 and the inner surface 476. The stud 432 includes a sidewall 512 and a sidewall 514.

With reference to Figs. 20, 22A, and 23, the ligating portion 426 of the rotatable member 404 includes two pairs of retention arms 480, 482 and 484, 486 that extend in a perpendicular manner from the studs 432, 434. The retention arms 480 and 482 share an outer surface 508 and a sidewall 510. Similarly, the retention arms 484 and 486 share an outer surface 492 and share a sidewall 494. The sidewalls 494 and 510 define a gap 488. When the rotatable member 404 is in the opened position, as is shown in Fig. 21, the gap 488 allows access to the archwire slot 16 such that the clinician may insert the archwire 18 into the archwire slot 16.

With reference to Figs. 22A and 22B, each of the retention arms 480 and 484 includes a lower surface 490. The surfaces 442a, 490, and 498 of the retention arm 484 form a cutout 504. Although not shown, it will be appreciated that the surfaces 442b, 490, and 498 of the retention arm 480 form a cutout 504. The cutouts 504 of the retention arms 480 and 484 are labeled in Fig. 23. As is shown in Fig. 23, the lower surface 490 is generally parallel with the upper surface 442a. The lower surface 490 of the retention arm 480 may have a similar parallel configuration with the upper surface 442b.

Each of the retention arms 482 and 486 differs from the retention arms 480 and 484. In that regard, the retention arms 482 and 484 have a lower surface 506 that forms a nonorthogonal angle with respect to the opposed slot surfaces 46 and 48 of the archwire slot 16. Specifically, with reference to Fig. 22A, the thickness of the retention arms 482 and 486 increases from the corresponding sidewalls 494, 510 toward the corresponding studs 432, 434. For example, as is shown in Fig. 22A, the retention arm 482 increases in through thickness from the sidewall 510 to the stud 432 with the through thickness being the greatest near the stud 432. Although not shown, the retention arm 486 has a similar configuration, with the retention arm 486 increasing in thickness from the sidewall 494 to the stud 434 with the thickness being the greatest near the stud 434. The retention arms 482 and 486 may therefore have a wedge-shaped configuration.

The surfaces 442a, 506, and 512 of the retention arm 482 forms a cutout 516. A similar configuration with the surface 442b and retention arm 486 forms the corresponding cutout 516. The cutouts 516 include a variable lingual-labial dimension defined between the lower surface 506 and the upper surface 442a. The change in dimension may correspond to the thickness increase in the retention arm 482. In general, the labial-lingual dimension decreases from near the corresponding sidewall 494, 510 toward the corresponding stud 432, 434. For example, as shown in Fig. 22A, the labial-lingual dimension linearly decreases according to the slope of the lower surface 506 from near the sidewall 510 to the stud 432. The labial-lingual dimension of the cutouts 516 may vary from a maximum distance of about 0.0711 mm (0.0028 inch) to a minimum labial-lingual dimension near the corresponding studs 432, 434 of about 0.0432 mm (0.0017 inch). By way of further example, the labial-lingual dimension of the cutouts 504 may also measure 0.0711 mm (0.0028 inch). It will be appreciated that while the labial-lingual dimensions of the opening of each cutout 504 and 516 are the same in the exemplary embodiment, embodiments of the invention are not limited to the cutouts 504 and 516 being the same dimension. For example, the labial-lingual dimension of the cutout 504 may 0.0533 mm (0.0021 inch) while the labial-lingual dimension of the opening of the cutout 516 may measure 0.0711 mm (0.0028 inch). Cutouts 504 and 516 may form lumens with opposed slot surfaces 46, 48 during treatment to retain the archwire 18 therein.

By adjusting the angular relationship between the lower surface 506 of the retention arms 482 and 486 different labial-lingual dimensions for the lumens formed by the cutouts 516 may be obtained. A specific labial-lingual dimension may be associated with a specific positive stop of the locking mechanism 410. The clinician may then select a labial-lingual dimension within a range of labial-lingual dimensions at predetermined intervals determined by the positive stops of the locking mechanism 410.

In this regard, during treatment, the rotatable member 404 may be rotated (e.g., clockwise) from the opened position shown in Fig. 20 to a closed position shown in Figs. 24-26. The clinician may rotate the rotatable member 404 by applying torque to the rotatable member 404 at or above the threshold level for that positive stop. For example, application of a torque on the rotatable member 404 above the threshold level may deform the spring pin 22 by its forced contact with an adjacent narrow region 462.

Once the pin 22 is deformed by squeezing it into the narrow region 462, continued application of torque causes the spring pin 22 to slide through the narrow region 462. As the spring pin 22 approaches the next enlarged portion 452, the spring pin 22 may expand and spontaneously fill the next enlarged portion 452. This movement and spontaneous expansion of the spring pin 22 may produce a noticeable click by which the clinician may be assured that the rotatable member 404 is in another closed position. Although not shown, it will be appreciated that the same interaction may occur between the spring pin 22 and the second retention aperture 470. Once in this intermediate closed position, the locking mechanism 410 may resist unintentional rotation of the rotatable member 404 in the clockwise and counterclockwise directions.

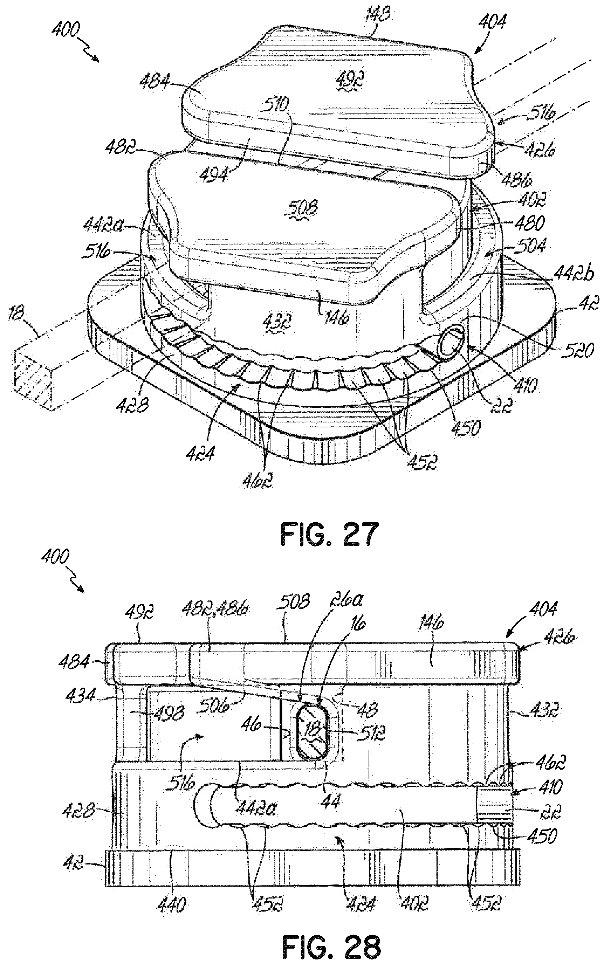

By rotating the rotatable member 404 in the clockwise direction, the clinician may position the rotatable member 404 in the closed position shown in Figs. 24-26. This closed position may be intermediate the opened position shown in Fig. 20 and the closed position shown in Fig. 27, described below. At the intermediate closed position shown, the spring pin 22 engages one enlarged portion 452 in the retention aperture 450 and so this positive stop prevents unintentional rotation in both the clockwise and counterclockwise directions.

In the closed position shown in Figs. 24-26, the retention arms 482 and 486 extend over the archwire slot 16 to retain the archwire 18 therein. The lumen 26a is formed around the archwire 18 by each cutout 516 in combination with the opposed slot surfaces 46, 48. With reference to Fig. 25, in particular, by forming the lingual and labial sides of the lumen 26a, 26b with the retention arms 482, 486, (i.e., the lower surfaces 506 and the upper surfaces 442a, 442b), the labial-lingual dimension of the lumen 26a, 26b is formed only by the rotatable member 404. So, the tolerance on the labial-lingual dimension is comparatively tighter than orthodontic brackets that form the labial-lingual dimension with two components (e.g., a bracket body and a ligating slide).

With continued reference to Fig. 25, by way of example only, and not limitation, the height dimension of the lumen 26a in the closed position may measure about 0.711 mm (0.028 inch). When the archwire 18 is a 0.483 mm x 0.635 mm (0.019 inch x 0.025 inch) archwire, the orthodontic bracket 400 may passively ligate the archwire 18 by virtue of at least about 0.076 mm (0.003 inch) difference in the labial-lingual dimension.

Further application of torque above a threshold amount on the rotatable member 404 in the clockwise direction causes the spring pin 22 to squeeze into the adjacent narrow region 462. With continued clockwise rotation, the deformed spring pin 22 slides through the narrow region 462 and enters the adjacent enlarged portion 452. While not shown, clockwise rotation of the rotatable member 404 reduces the labial-lingual dimension of the archwire slot 16. As can be appreciated by Fig. 25, clockwise rotation of the rotatable member 404 moves the surface 506 closer to the archwire 18. The rotatable member 404 slides transversely relative to the archwire 18 so that the archwire 18 is positioned deeper in the cutout 516 at a position in which the lumen has a smaller labial-lingual dimension. In this way, the clinician may adjust the lumen dimension according to a predetermined amount based on the orientation of the surface 506 and the spacing between adjacent enlarged portions 452. Advantageously, rotation of the rotatable member 404 pushes the archwire 18 toward the upper surface 442a (i.e., in the lingual direction). By pushing the archwire 18 in this direction, the in-out value of the bracket always remains the same. Further, the clinician may adjust the lumen dimension on a tooth-by-tooth basis for a single archwire.

With continued clockwise rotation of the rotatable member 404, the locking mechanism 410 locks the rotatable member 404 relative to the bracket body 402 by engagement between the spring pin 22 and each successive enlarged portion 452 of the retention aperture 450.

In the exemplary embodiment shown in Figs. 27-29, the retention aperture 450 has an end enlarged portion 520. Once the spring pin 22 enters the end enlarged portion 520, further clockwise rotation is prohibited.

At this orientation of the locking mechanism 410, the retention arms 482, 486 may still form the lumen 26a. However, the lumen 26a may be formed by the cutout 516 and the slot surface 46. In other words, the rotatable member 404 may define three sides of the lumen 26a and with one surface of the slot 16 defining a fourth side of the lumen 26a. In this configuration, and depending on the size of the archwire 18, the rotatable member 404 may be moved to a position at which little, if any, clearance exists between the archwire 18 and the rotatable member 404. The rotatable member 404 may clamp the archwire 18 against the bracket body 402. Thus, the rotatable member 404 may be rotated to a position at which the orthodontic bracket 400 is active with respect to the archwire 18 at that location. The rotatable member 404 may forcibly contact the archwire 18 in the occlusal-gingival direction (i.e., between the sidewall 512 and the slot surface 46) and in the labial-lingual direction (i.e., between the surface 506 and the surface 442a). The maximum labial-lingual dimension of the lumen 26a may be determined by the labial-lingual dimension between the surface 506 and the surface 442a immediately adjacent the sidewall 512.

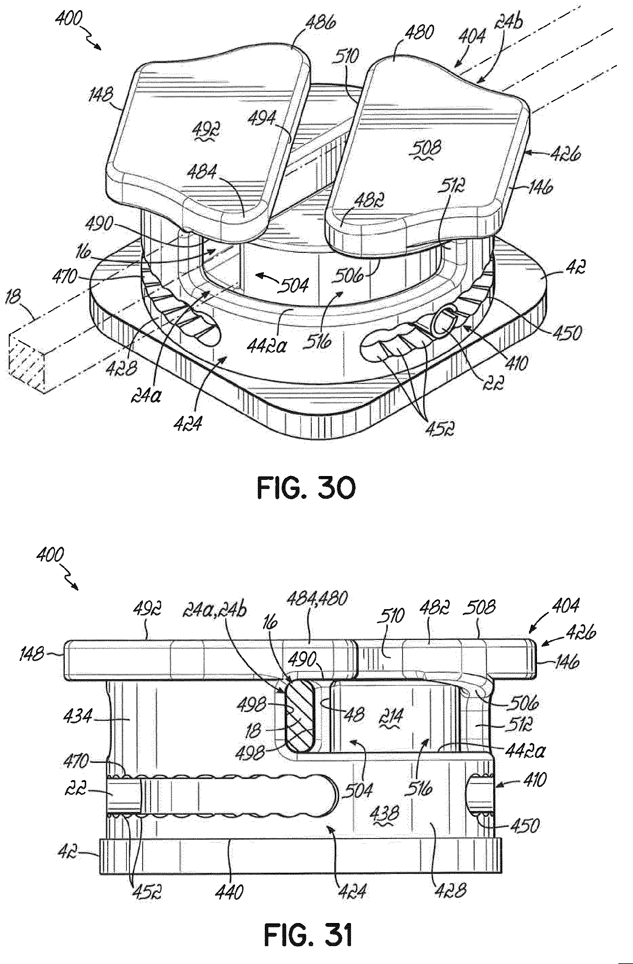

The rotatable member 404 may be rotated in the counterclockwise direction from the position shown in Figs. 27-29 to the opened position shown in Figs. 20, 22A, and 22B. And from that opened position, further counterclockwise rotation of the rotatable member 404 may position the rotatable member 404 at the closed position shown in Figs. 30 and 31. At this position, the locking mechanism 410 may prevent unintentional rotation of the rotatable member 404, as is described above, during rotation. Once in the intermediate closed position, the locking mechanism 410 may prevent unintentional rotation in each of the clockwise and the counterclockwise directions.

At the position shown in Figs. 30 and 31, the retention arms 480, 484 close the archwire slot 16 with the lower surface 490 forming the labial boundary and the surfaces 442a or 442b forming the lingual boundary of the lumen 24a, 24b. Further, the archwire 18 may be bounded by the sidewall 498 on one side and the slot surface 48 on the other in the occlusal-gingival direction. However, the labial-lingual dimension of the lumen 24a, 24b may be greater than the corresponding dimension of the archwire 18.

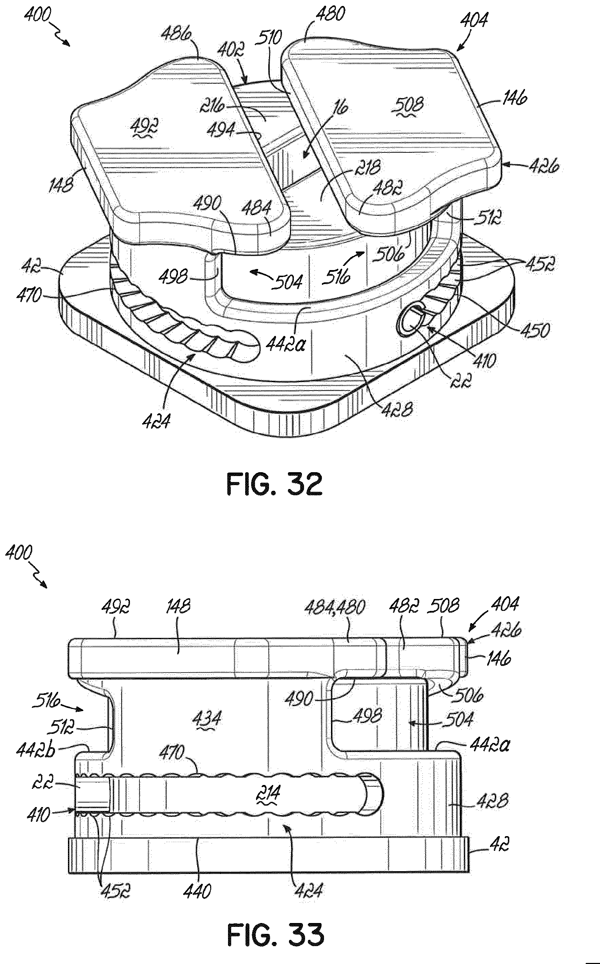

Further counterclockwise rotation of the rotatable member 404 may be possible as is shown in Figs. 32-34 at which the rotatable member 404 may close off the archwire slot 16 in the bracket body 402 at its mesial and distal ends.

Advantageously, the orthodontic bracket 400 may eliminate the need to change archwires during treatment. A single archwire may be utilized during the initial stage of treatment in which passive ligation is desired. This may be obtained by rotating the rotatable member 404 to one closed position in which a pair of lumens at each side of the bracket body 402 is larger in labial-lingual dimension than the archwire. Once treatment progresses to a point that active ligation would be beneficial, the clinician may rotate the rotatable member 404 to other closed positions in which the labial-lingual dimension of the lumen is reduced so as to more closely approximate the height and/or width dimensions of the archwire 18. There may be multiple predetermined orientations of the rotatable member 404 at which the labial-lingual dimension of the lumen is known. The clinician may therefore select the dimension of the lumen for a particular archwire at any single one of the teeth. The clinician may adjust the orthodontic bracket 400 from passive ligation and gradually reduce the clearance between the archwire and the orthodontic bracket 400 by rotating the rotatable member 404 through a series of predetermined positive stops. The orthodontic bracket 400 on adjacent teeth may be independently adjusted such that there is a different lumen dimension for the same archwire. Thus, embodiments of the invention facilitate clinical control on a tooth-by-tooth basis between fully passive and fully active with preselected in-between positions.

In addition, as with the embodiment shown in Fig. 11, there may be a range of different archwire sizes that may fit into the archwire slot and that may be utilized to produce both active and passive ligation. The clinician need not be concerned with the selection of the archwire because at least the labial lingual dimension of the archwire slot may be adjusted to produce active ligation or passive ligation.

Further, in view of the above, by a clockwise or counterclockwise rotation, the orthodontic bracket 400 produces audible clicks and/or tactile responses to indicate the position of the locking mechanism 410. With a clicking type of response from the locking mechanism 410, the clinician may be assured that the rotatable member 404 is at a predetermined positive stop location and is properly positioned with a lumen of known labial-lingual dimension.

While the present invention has been illustrated by a description of various embodiments and while these embodiments have been described in some detail, additional advantages and modifications will readily appear to those of ordinary skill in the art. The various features of the invention may be used alone or in any combination depending on the needs and preferences of the user.

## Claims

1. An orthodontic bracket for coupling an archwire with a tooth, comprising:
a bracket body (12, 202, 402) that includes an archwire slot (16); and
a rotatable member (14, 204, 404) that is coupled to the bracket body (12, 202, 402), is rotatable relative to the bracket body (12, 202, 402) from an opened position to at least one closed position, and includes a body portion (70, 224, 424) and a ligating portion (72, 226, 426) extending from the body portion (70, 224, 424) and having at least one retention arm (132, 134, 136, 138) that together with the archwire slot (16) forms a lumen for retaining the archwire (18) when the rotatable member (14, 204, 404) is in the at least one closed position, **characterised in that** the body portion (70, 224, 424) defines an opening for receiving the bracket body (12, 202, 402).

2. The orthodontic bracket of claim 1, wherein the rotatable member (14, 204, 404) is rotatable about a central axis (64, 220) that intersects the archwire slot.

3. The orthodontic bracket of any preceding claim, further comprising a locking mechanism (20, 210, 410) that couples the rotatable member (14, 204, 404) to the bracket body (12, 202, 402) and that provides at least one positive stop in the rotation of the rotatable member (14, 204, 404).

4. The orthodontic bracket of claim 3, wherein the locking mechanism includes a retention aperture (90 250, 450) having at least one nonplanar surface and a spring pin (22) slidably cooperates with at least a portion of the nonplanar surface during rotation of the rotatable member (14, 204, 404).

5. The orthodontic bracket of claim 4, wherein the bracket body further includes a passageway (68) that receives the spring pin (22) and, when the bracket body is secured to a tooth, the passageway (68) is between the archwire slot (16) and the tooth.

6. The orthodontic bracket of any preceding claim, wherein the ligating portion (72, 226, 426) defines two opposing surfaces that at least partially define a labial side and a lingual side of the lumen.

7. The orthodontic bracket of any preceding claim, wherein the ligating portion (72, 226, 426) has a pair of retention arms (132, 134, 136, 138) and is positionable at a first closed position in which the retention arms (132, 134, 136, 138) and the archwire slot (16) define a first pair of lumens, and wherein the rotatable member (14, 204, 404) is positionable at a second closed position different from the first closed position in which the retention arms (132, 134, 136, 138) and the archwire slot (16) define a second pair of lumens, at least one of the first lumens has a labial-lingual dimension that is less than a labial-lingual dimension of at least one lumen of the second pair of lumens.

8. The orthodontic bracket of any preceding claim, wherein the archwire slot (16) includes a base surface (44) and opposing slot surfaces (46, 48) that extend outwardly from the base surface (44) and when the rotatable member (404) is in the closed position, the lumen (26a) being defined by the rotatable member (404) and only one of the opposing slot surfaces.

9. The orthodontic bracket of any preceding claim, wherein the archwire slot (16) includes a base surface (44) and opposing slot surfaces (46, 81) that extend outwardly from the base surface and the rotatable member (404) includes a sidewall (498) that defines one surface of the lumen, the sidewall (498) being offset in a labial-lingual direction relative to the base surface (44).

10. The orthodontic bracket of any preceding claim, wherein the archwire slot (16) includes a base surface (44) and opposing slot surfaces (46, 48) that extend outwardly from the base surface (44), the retention arm (482, 484) has a lower surface (506) that defines a portion of the lumen and is oriented at a nonorthogonal angle relative to at least one opposing slot surface.

11. The orthodontic bracket of any preceding claim, wherein the archwire slot includes a base surface (44) and opposing slot surfaces (46, 48) that extend outwardly from the base surface (44) and the rotatable member (204) includes a sidewall (238) having an upper surface (242a, 242b) that defines a portion of the lumen and is oriented at a nonorthogonal angle relative to at least one opposing slot surface.

12. The orthodontic bracket of any preceding claim, wherein the rotatable member (14, 204, 404) is rotatable from the opened position to each of (i) a first closed position in which the rotatable member (14, 204, 404) and the archwire slot (16) define a first lumen having a first dimension, (ii) a second closed position in which the rotatable member (14, 204, 404) and the archwire slot define a second lumen (16) having a second dimension, and (iii) a third closed position in which the rotatable member (14, 204, 404) and the archwire slot (16) define a third lumen having a third dimension, wherein each of the first dimension, the second dimension, and the third dimension is different.

13. The orthodontic bracket of any claims 2-11 wherein, when a first archwire (18) is inserted into the archwire slot (16) and the rotatable member (14, 204, 404) is rotated to a first closed position, the rotatable member (14, 204, 404) actively ligates the first archwire (18), and when the rotatable member (14, 204, 404) is rotated to a second closed position and to a third closed position, the rotatable member (14, 204, 404) passively ligates the first archwire (18), and
wherein, when a second archwire having at least one cross sectional dimension larger than a corresponding cross sectional dimension of the first archwire is inserted into the archwire slot (16) and the rotatable member (14, 204, 404) is rotated to the second closed position or to the third closed position, the rotatable member (14, 204, 404) actively ligates the second archwire.

14. The orthodontic bracket of claim 13, wherein when the rotatable member (14, 204, 404) is rotated to the third closed position, the rotatable member passively ligates the second archwire.

15. The orthodontic bracket of any preceding claim wherein the rotatable member includes two tie-wings (146, 148).

16. The orthodontic bracket of any preceding claim wherein the body portion (70, 224, 424) of the rotatable member (14, 204, 404) forms at least a majority of the external surfaces of the orthodontic bracket.

## Patentansprüche

1. Kieferorthopädisches Bracket zum Verbinden eines Bogendrahts mit einem Zahn, das Folgendes umfasst:
einen Bracket-Körper (12, 202, 402), der einen Bogendrahtschlitz (16) beinhaltet; und
ein drehbares Element (14, 204, 404), das mit dem Bracket-Körper (12, 202, 402) verbunden ist, relativ zum Bracket-Körper (12, 202, 402) aus einer geöffneten Position in wenigstens eine geschlossene Position drehbar ist und einen Körperabschnitt (70, 224, 424) und einen Ligaturabschnitt (72, 226, 426) beinhaltet, der sich vom Körperabschnitt (70, 224, 424) erstreckt und wenigstens einen Retentionsarm (132, 134, 136, 138) hat, der zusammen mit dem Bogendrahtschlitz (16) ein Lumen zum Festhalten des Bogendrahts (18) bildet, wenn sich das drehbare Element (14, 204, 404) in der wenigstens einen geschlossenen Position befindet, **dadurch gekennzeichnet, dass** der Körperabschnitt (70, 224, 424) eine Öffnung für die Aufnahme des Bracket-Körpers (12, 202, 402) definiert.

2. Kieferorthopädisches Bracket nach Anspruch 1, wobei das drehbare Element (14, 204, 414) um eine Mittelachse (64, 220) drehbar ist, die den Bogendrahtschlitz schneidet.

3. Kieferorthopädisches Bracket nach einem vorherigen Anspruch, das ferner einen Verriegelungsmechanismus (20, 210, 410) umfasst, der das drehbare Element (14, 204, 404) mit dem Bracket-Körper (12, 202, 402) verbindet und der wenigstens einen festen Anschlag in der Drehung des drehbaren Elements (14, 204, 404) vorsieht.

4. Kieferorthopädisches Bracket nach Anspruch 3, wobei der Verriegelungsmechanismus eine Retentionsöffnung (90, 250, 450) mit wenigstens einer nicht ebenen Oberfläche beinhaltet und ein Federstift (22) während der Drehung des drehbaren Elements (14, 204, 404) gleitend mit wenigstens einem Abschnitt der nicht ebenen Oberfläche zusammenwirkt.

5. Kieferorthopädisches Bracket nach Anspruch 4, wobei der Bracket-Körper ferner einen Durchgang (68) beinhaltet, der den Federstift (22) aufnimmt, und, wenn der Bracket-Körper an einem Zahn befestigt ist, der Durchgang (68) zwischen dem Bogendrahtschlitz (16) und dem Zahn liegt.

6. Kieferorthopädisches Bracket nach einem vorherigen Anspruch, wobei der Ligaturabschnitt (72, 226, 426) zwei gegenüberliegende Oberflächen definiert, die wenigstens teilweise eine labiale Seite und eine linguale Seite des Lumens definieren.

7. Kieferorthopädisches Bracket nach einem vorherigen Anspruch, wobei der Ligaturabschnitt (72, 226, 426) ein Paar Retentionsarme (132, 134, 136, 138) hat und in einer ersten geschlossenen Position positionierbar ist, in der die Retentionsarme (132, 134, 136, 138) und der Bogendrahtschlitz (16) ein erstes Lumenpaar definieren, und wobei das drehbare Element (14, 202, 404) in einer zweiten geschlossenen Position positionierbar ist, die sich von der ersten geschlossenen Position unterscheidet, in der die Retentionsarme (132, 134, 136, 138) und der Bogendrahtschlitz (16) ein zweites Lumenpaar definieren, wenigstens eines der ersten Lumen eine labial-linguale Abmessung hat, die kleiner als eine labial-linguale Abmessung von wenigstens einem Lumen des zweiten Lumenpaares ist.

8. Kieferorthopädisches Bracket nach einem vorherigen Anspruch, wobei der Bogendrahtschlitz (16) eine Basisfläche (44) und gegenüberliegende Schlitzflächen (46, 48) beinhaltet, die sich von der Basisfläche (44) nach außen erstrecken, und, wenn sich das drehbare Element (404) in der geschlossenen Position befindet, das Lumen (26a) durch das drehbare Element (404) und nur eine der gegenüberliegenden Schlitzflächen definiert ist.

9. Kieferorthopädisches Bracket nach einem vorherigen Anspruch, wobei der Bogendrahtschlitz (16) eine Basisfläche (44) und gegenüberliegende Schlitzflächen (46, 81) beinhaltet, die sich von der Basisfläche nach außen erstrecken, und das drehbare Element (404) eine Seitenwand (498) beinhaltet, die eine Oberfläche des Lumens definiert, wobei die Seitenwand (498) in einer labial-lingualen Richtung relativ zur Basisfläche (44) versetzt ist.

10. Kieferorthopädisches Bracket nach einem vorherigen Anspruch, wobei der Bogendrahtschlitz (16) eine Basisfläche (44) und gegenüberliegende Schlitzflächen (46, 48) beinhaltet, die sich von der Basisfläche (44) nach außen erstrecken, wobei der Retentionsarm (482, 484) eine Unterseite (506) hat, die einen Abschnitt des Lumens definiert und in einem nicht orthogonalen Winkel relativ zu wenigstens einer gegenüberliegenden Schlitzfläche orientiert ist.

11. Kieferorthopädisches Bracket nach einem vorherigen Anspruch, wobei der Bogendrahtschlitz eine Basisfläche (44) und gegenüberliegende Schlitzflächen (46, 48) beinhaltet, die sich von der Basisfläche (44) nach außen erstrecken, und das drehbare Element (204) eine Seitenwand (238) mit einer Oberseite (242a, 242b) beinhaltet, die einen Abschnitt des Lumens definiert und in einem nicht orthogonalen Winkel relativ zu wenigstens einer gegenüberliegenden Schlitzfläche orientiert ist.

12. Kieferorthopädisches Bracket nach einem vorherigen Anspruch, wobei das drehbare Element (14, 204, 404) aus der geöffneten Position in jeweils (i) eine erste geschlossene Position drehbar ist, in der das drehbare Element (14, 204, 404) und der Bogendrahtschlitz (16) ein erstes Lumen mit einer ersten Abmessung definieren, (ii) eine zweite geschlossene Position drehbar ist, in der das drehbare Element (14, 204, 404) und der Bogendrahtschlitz ein zweites Lumen (16) mit einer zweiten Abmessung definieren, und (iii) eine dritte geschlossene Position drehbar ist, in der das drehbare Element (14, 204, 404) und der Bogendrahtschlitz (16) ein drittes Lumen mit einer dritten Abmessung definieren, wobei die erste Abmessung, die zweite Abmessung und die dritte Abmessung jeweils unterschiedlich sind.

13. Kieferorthopädisches Bracket nach einem der Ansprüche 2-11, wobei, wenn ein erster Bogendraht (18) in den Bogendrahtschlitz (16) eingefügt und das drehbare Element (14, 204, 404) in eine erste geschlossene Position gedreht wird, das drehbare Element (14, 204, 404) den ersten Bogendraht (18) aktiv ligiert, und wenn das drehbare Element (14, 204, 404) in eine zweite geschlossene Position und in eine dritte geschlossene Position gedreht wird, das drehbare Element (14, 204, 404) den ersten Bogendraht (18) passiv ligiert, und
wobei, wenn ein zweiter Bogendraht mit wenigstens einer Querschnittsabmessung, die größer als eine entsprechende Querschnittsabmessung des ersten Bogendrahts ist, in den Bogendrahtschlitz (16) eingefügt und das drehbare Element (14, 204, 404) in die zweite geschlossene Position oder in die dritte geschlossene Position gedreht wird, das drehbare Element (14, 204, 404) den zweiten Bogendraht aktiv ligiert.

14. Kieferorthopädisches Bracket nach Anspruch 13, wobei, wenn das drehbare Element (14, 204, 404) in die dritte geschlossene Position gedreht wird, das drehbare Element den zweiten Bogendraht passiv ligiert.

15. Kieferorthopädisches Bracket nach einem vorherigen Anspruch, wobei das drehbare Element zwei Bindeflügel (146, 148) beinhaltet.

16. Kieferorthopädisches Bracket nach einem vorherigen Anspruch, wobei der Körperabschnitt (70, 224, 424) des drehbaren Elements (14, 204, 404) wenigstens einen Großteil der externen Oberflächen des kieferorthopädischen Brackets bildet.

## Revendications

1. Support orthodontique destiné à coupler un arc à une dent, comprenant :
un corps de support (12, 202, 402) qui comporte une fente à arc (16) ; et
un élément rotatif (14, 204, 404) qui est couplé au corps de support (12, 202, 402), peut tourner par rapport au corps de support (12, 202, 402) d'une position ouverte jusqu'à au moins une position fermée, et comporte une partie de corps (70, 224, 424) et une partie de ligature (72, 226, 426) partant de la partie de corps (70, 224, 424) et présentant au moins un bras de retenue (132, 134, 136, 138) qui, avec la fente à arc (16), forme une lumière pour retenir l'arc (18) quand l'élément rotatif (14, 204, 404) est dans l'au moins une position fermée, **caractérisé en ce que** la partie de corps (70, 224, 424) définit une ouverture pour recevoir le corps de support (12, 202, 402).

2. Support orthodontique selon la revendication 1, dans lequel l'élément rotatif (14, 204, 404) peut tourner autour d'un axe central (64, 220) qui intersecte la fente à arc.

3. Support orthodontique selon n'importe quelle revendication précédente, comprenant en outre un mécanisme de verrouillage (20, 210, 410) qui couple l'élément rotatif (14, 204, 404) au corps de support (12, 202, 402) et qui fournit au moins une butée positive dans la rotation de l'élément rotatif (14, 204, 404).

4. Support orthodontique selon la revendication 3, dans lequel le mécanisme de verrouillage comporte une ouverture de retenue (90 250, 450) présentant au moins une surface non plane et une tige ressort (22) qui coopère de manière coulissante avec au moins une partie de la surface non plane durant la rotation de l'élément rotatif (14, 204, 404).

5. Support orthodontique selon la revendication 4, dans lequel le corps de support comporte en outre un passage (68) qui reçoit la tige ressort (22) et, quand le corps de support est fixé à une dent, le passage (68) se trouve entre la fente à arc (16) et la dent.

6. Support orthodontique selon n'importe quelle revendication précédente, dans lequel la partie de ligature (72, 226, 426) définit deux surfaces opposées qui définissent au moins partiellement un côté labial et un côté lingual de la lumière.

7. Support orthodontique selon n'importe quelle revendication précédente, dans lequel la partie de ligature (72, 226, 426) présente une paire de bras de retenues (132, 134, 136, 138) et peut être positionnée à une première position fermée à laquelle les bras de retenue (132, 134, 136, 138) et la fente à arc (16) définissent une première paire de lumières, et dans lequel l'élément rotatif (14, 204, 404) peut être positionné à une seconde position fermée différente de la première position fermée à laquelle les bras de retenue (132,134, 136, 138) et la fente à arc (16) définissent une seconde paire de lumières, au moins une des premières lumières ayant une dimension labiale-linguale inférieure à une dimension labiale-linguale d'au moins une lumière de la seconde paire de lumières.

8. Support orthodontique selon n'importe quelle revendication précédente, dans lequel la fente à arc (16) comporte une surface de base (44) et des surfaces de fente opposées (46, 48) qui s'étendent vers l'extérieur depuis la surface de base (44) et quand l'élément rotatif (404) est dans la position fermée, la lumière (26a) étant définie par l'élément rotatif (404) et une seule des surfaces de fente opposées.

9. Support orthodontique selon n'importe quelle revendication précédente, dans lequel la fente à arc (16) comporte une surface de base (44) et des surfaces de fente opposées (46, 81) qui s'étendent vers l'extérieur depuis la surface de base et l'élément rotatif (404) comporte une paroi latérale (498) qui définit une surface de la lumière, la paroi latérale (498) étant décalée dans un sens labial-lingual par rapport à la surface de base (44).

10. Support orthodontique selon n'importe quelle revendication précédente, dans lequel la fente à arc (16) comporte une surface de base (44) et des surfaces de fente opposées (46, 48) qui s'étendent vers l'extérieur depuis la surface de base (44), le bras de retenue (482, 484) a une surface inférieure (506) qui définit une partie de la lumière et est orientée à un angle non orthogonal par rapport à au moins une surface de fente opposée.

11. Support orthodontique selon n'importe quelle revendication précédente, dans lequel la fente à arc comporte une surface de base (44) et des surfaces de fente opposées (46, 48) qui s'étendent vers l'extérieur depuis la surface de base (44) et l'élément rotatif (204) comporte une paroi latérale (238) présentant une surface supérieure (242a, 242b) qui définit une partie de la lumière et est orientée à un angle non orthogonal par rapport à au moins une surface de fente opposée.

12. Support orthodontique selon n'importe quelle revendication précédente, dans lequel l'élément rotatif (14, 204, 404) peut être tourné de la position ouverte sur chacune (i) d'une première position fermée dans laquelle l'élément rotatif (14, 204, 404) et la fente à arc (16) définissent une première lumière ayant une première dimension, (ii) une deuxième position fermée dans laquelle l'élément rotatif (14, 204, 404) et la fente à arc définisse une deuxième lumière (16) ayant une deuxième dimension, et (iii) une troisième position fermée dans laquelle l'élément rotatif (14, 204, 404) et la fente à arc (16) définissent une troisième lumière ayant une troisième dimension, dans lequel chacune de la première dimension, de la deuxième dimension et de la troisième dimension est différente.

13. Support orthodontique selon l'une quelconque des revendications 2 à 11 dans lequel, quand un premier arc (18) est inséré dans la fente à arc (16) et l'élément rotatif (14, 204, 404) est tourné sur une première position fermée, l'élément rotatif (14, 204, 404) ligature activement le premier arc (18), et quand l'élément rotatif (14, 204, 404) est tourné sur une deuxième position fermée et sur une troisième position fermée, l'élément rotatif (14, 204,404) ligature passivement le premier arc (18), et
dans lequel, quand un second arc ayant au moins une dimension de coupe transversale supérieure à une dimension de coupe transversale correspondante du premier arc est inséré dans la fente à arc (16) et l'élément rotatif (14, 204, 404) est tourné sur la deuxième position fermée ou sur la troisième position fermée, l'élément rotatif (14, 204, 404) ligature activement le second arc.

14. Support orthodontique selon la revendication 13, dans lequel quand l'élément rotatif (14, 204, 404) est tourné sur la troisième position fermée, l'élément rotatif ligature passivement le second arc.

15. Support orthodontique selon n'importe quelle revendication précédente dans lequel l'élément rotatif comporte deux ailes d'ancrage (146, 148).

16. Support orthodontique selon n'importe quelle revendication précédente dans lequel la partie de corps (70, 224, 424) de l'élément rotatif (14, 204, 404) forme au moins une majorité des surfaces externes du support orthodontique.
